# EUROPEAN PATENT APPLICATION

(11) **EP 2 998 909 A1**
(43) Date of publication of application: **23.03.2016**
(21) Application number: 15178868.4
(22) Date of filing: 29.07.2015
(51) Int. Cl.: G06Q 10/00, G06F 17/50, G06Q 50/04

(54) **INTERACTIVE IMAGING SYSTEM**

(30) Priority: 18.09.2014 US 201414490132
(71) Applicant: The Boeing Company, Chicago, IL 60606-2016 (US)
(72) Inventor: SCOTT, Jeremiah Kent, CHICAGO, IL, 60606-2016 (US)
(74) Representative: Cabinet Plasseraud

(57) **Abstract**

A method and apparatus for providing a visual aid in assembling an aircraft. A display for a portion of an aircraft is displayed on a display system in a mobile data processing system. The display on the display system comprises an image of the portion of the aircraft and hot spots over areas of the image. The hot spots correspond to installation plans for the areas over which the hot spots are located and the hot spots are selectable by user input. Information is displayed on the display system in the mobile data processing system about the installation plan for an area in the areas when a hot spot in the hot spots corresponding to the area is selected by the user input. The display of the information on the display system provides a visual aid that enables performance of an assembly operation in the area selected.

## Description

### BACKGROUND INFORMATION

### 1. Field:

The present disclosure relates generally to aircraft and, in particular, to manufacturing aircraft. Still more particularly, the present disclosure relates to a method and apparatus for providing a visual aid for assembly processes used to build an aircraft.

### 2. Background:

Manufacturing aircraft, such as commercial aircraft, is a complex process involving the design and assembly of thousands of parts. Many of the parts are assembled to form the assemblies and subassemblies for the aircraft.

Different tasks are assigned operations to perform the assembly of aircraft. These operations may include, for example, putting together parts to form an assembly, inspecting an assembly, or other suitable operations.

For example, inspections are performed as part of the assembly process for the aircraft. The inspections ensure that the aircraft has been assembled in a desired manner, and whether the parts themselves function as desired. These inspections are formed as part of a quality control process in building the aircraft. With the size and number of aircraft, finding a location to perform operations to put parts together for assembly or to inspect an assembly of parts is often a time-consuming and tedious process.

An inspector is assigned to perform an inspection of an assembly. The inspector assigned this task enters and moves within the aircraft to find the location of the assembly for inspection.

Performing an inspection of an assembly may take more time and effort than desired unless the inspector has had experience with inspecting and locating a particular assembly. Additionally, the same model of aircraft may have different options. As a result, one aircraft may have an assembly with a different location from another aircraft. In yet another example, one aircraft may include the assembly while another aircraft does not include the assembly.

With the size of a commercial aircraft and the different options available for a commercial aircraft, the inspection process may be more difficult than desired. Currently, an inspector may have a binder that includes a checklist, inspection criteria, photographs of correct and incorrect installations, and engineering drawings. The inspector uses these materials to locate and perform an inspection of an assembly in the aircraft. These materials, however, do not necessarily provide a good understanding of the location of the assembly in which the inspection is to be performed, when an assembly is correct, or some combination thereof.

The inspector may undergo training to obtain a better understanding of inspections for particular assemblies in an aircraft. Also, as an inspector gains experience in inspecting the same assembly or groups of assemblies, the inspection process becomes faster and easier to perform.

However, when a new assembly is assigned to the inspector, the learning process begins again. As a result, it is often desirable to assign inspections of assemblies to inspectors who have experience with those assemblies. This situation, however, may result in limitations to the manner in which inspectors may be assigned inspection tasks. As a result, performing inspections may not occur as quickly and efficiently as desired.

Therefore, it would be desirable to have a method and apparatus that take into account at least some of the issues discussed above, as well as other possible issues. For example, one technical issue with performing operations in assembling an aircraft is an inability to enable performance of the operations as quickly and efficiently as desired.

### SUMMARY

An illustrative embodiment of the present disclosure provides a method for providing a visual aid in assembling an aircraft. A display for a portion of an aircraft is displayed on a display system in a mobile data processing system. The display on the display system comprises an image of the portion of the aircraft and hot spots over areas of the image. The hot spots correspond to installation plans for the areas over which the hot spots are located and the hot spots are selectable by user input. Information is displayed on the display system in the mobile data processing system about the installation plan for an area in the areas when a hot spot in the hot spots corresponding to the area is selected by the user input. The display of the information on the display system provides a visual aid that enables performance of an assembly operation in the area selected.

Another illustrative embodiment of the present disclosure provides an apparatus comprising a visualizer that displays a display for a portion of an aircraft on a display system in a mobile data processing system. The display on the display system comprises an image of the portion of the aircraft and hot spots over areas of the image. The hot spots correspond to installation plans for the areas over which the hot spots are located and the hot spots are selectable by user input. The visualizer also displays information on the display system in the mobile data processing system about the installation plan for an area in the areas when a hot spot in the hot spots corresponding to the area is selected by the user input. The display of the information on the display system provides a visual aid that enables performance of an assembly operation in the area selected.

Yet another illustrative embodiment provides an aircraft management system comprising a manufacturing system and a control system. The control system displays a display for a portion of an aircraft on a display system in a mobile data processing system. The display on the display system comprises an image of the portion of the aircraft and hot spots over areas of the image. The hot spots correspond to installation plans for the areas over which the hot spots are located and the hot spots are selectable by user input. The control system also displays information on the display system in the mobile data processing system about the installation plan for an area in the areas when a hot spot in the hot spots corresponding to the area is selected by the user input. The display of the information provides a visual aid that enables performance of an assembly operation in the area selected using the manufacturing system.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a block diagram of an aircraft manufacturing environment in accordance with an illustrative embodiment;
**Figure 2** is an illustration of a block diagram of a graphical user interface displayed on a display system in accordance with an illustrative embodiment;
**Figure 3** is an illustration of data flow used to generate a display based on identification of the position of the mobile data processing system in accordance with an illustrative embodiment;
**Figure 4** is an illustration of a block diagram of data flow used to generate information in accordance with an illustrative embodiment;
**Figure 5** is an illustration of a graphical user interface for displaying a visual aid in accordance with an illustrative embodiment;
**Figure 6** is an illustration of a graphical user interface displaying a visual aid in accordance with an illustrative embodiment;
**Figure 7** is an illustration of a display of a portion of an aircraft in accordance with an illustrative embodiment;
**Figure 8** is an illustration of information displayed for an installation plan in accordance with an illustrative embodiment;
**Figure 9** is an illustration of information displayed for an installation plan in accordance with an illustrative embodiment;
**Figure 10** is an illustration of information displayed for an installation plan in accordance with an illustrative embodiment;
**Figure 11** is an illustration of information displayed for an installation plan in accordance with an illustrative embodiment;
**Figure 12** is an illustration of information displayed for an installation plan in accordance with an illustrative embodiment;
**Figure 13** is an illustration of a display of a portion of an aircraft in accordance with an illustrative embodiment;
**Figure 14** is an illustration of a display of a portion of an aircraft in accordance with an illustrative embodiment;
**Figure 15** is an illustration of a display of a portion of an aircraft in accordance with an illustrative embodiment;
**Figure 16** is an illustration of a flowchart of a process for a method for providing a visual aid in assembling an aircraft in accordance with an illustrative embodiment;
**Figure 17** is an illustration of a flowchart of a process for identifying a portion of an aircraft in accordance with an illustrative embodiment;
**Figure 18** is another illustration of a flowchart of a process for identifying a portion of an aircraft in accordance with an illustrative embodiment;
**Figure 19** is an illustration of a flowchart of a process for generating point-to-point measurements in accordance with an illustrative embodiment;
**Figure 20** is an illustration of a data processing system in the form of a block diagram in accordance with an illustrative embodiment;
**Figure 21** is an illustration of an aircraft manufacturing and service method in the form of a block diagram in accordance with an illustrative embodiment;
**Figure 22** is an illustration of an aircraft in the form of a block diagram in which an illustrative embodiment may be implemented; and
**Figure 23** is an illustration of a block diagram of a product management system in accordance with an illustrative embodiment.

### DETAILED DESCRIPTION

The illustrative embodiments recognize and take into account that currently used techniques for performing operations to assemble aircraft do not provide the visual aids needed to understand the location of the assembly, and how different parts in the assembly should be put together. The illustrative embodiments recognize and take into account that currently used materials such as engineering drawings do not show what the assembly should look like when the parts are assembled. The illustrative embodiments also recognize and take into account that the checklist does not provide visual aids with respect to the different entries that are to be verified during assembly of parts. Further, the two-dimensional photos provided may not provide a good understanding of the location of the area for the assembly.

The illustrative embodiments also recognize and take into account that the desired visual aids are currently not provided in a manner that is portable for use in forming operations in assembling an aircraft. For example, the illustrative embodiments recognize and take into account that a model or models of an entire aircraft may be useful and viewable by an operator at a data processing system such as a workstation. The workstation, however, is not portable and cannot be carried by the operator into the aircraft to perform an operation. As a result, the operator cannot view the model or models available at the workstation while working in the aircraft.

The illustrative embodiments recognize and take into account that some data processing systems are portable and can be carried by an operator. For example, the illustrative embodiments recognize and take into account that mobile data processing systems, such as a tablet, a mobile phone, a laptop computer, or other type of data processing system is available. The illustrative embodiments recognize and take into account, however, that the resources available on mobile data processing systems are not large enough to store and display a model or models of an entire aircraft. For example, the storage, random access memory, central processor unit, graphics processing units, and other components in a mobile data processing system may not be sufficient to display a model or models for an entire aircraft.

Further, the illustrative embodiments also recognize and take into account that generating the graphics data for display on a mobile data processing system is resource intensive when generating graphics data from the one or more models for aircraft. These models may be, for example, computer-aided design models.

Thus, the illustrative embodiments provide a method and apparatus that provide a technical solution to the issue of enabling the performance of operations as quickly and efficiently as desired when assembling an aircraft.

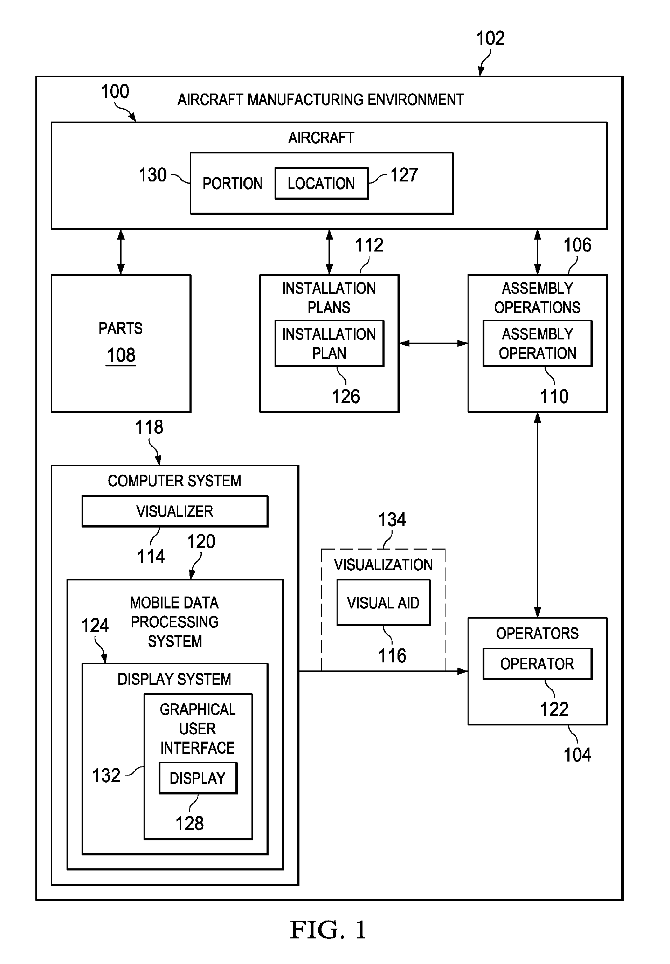

With reference now to the figures and in particular with reference to **Figure 1**, an illustration of a block diagram of an aircraft manufacturing environment is depicted in accordance with an illustrative embodiment. As depicted, aircraft **100** is assembled in aircraft manufacturing environment **102**. In the illustrative example, aircraft **100** may take various forms. For example, aircraft **100** may be a commercial airplane, a fighter aircraft, a rotorcraft, a helicopter, or some other suitable type of aircraft.

In these illustrative examples, operators **104** perform assembly operations **106** to assemble parts **108** to form aircraft **100**. As depicted, assembly operations **106** may take various forms. For example, assembly operation **110** in assembly operations **106** may be selected from one of an assembly operation, an inspection operation, or some other suitable operation performed to manufacture aircraft **100**.

Many of assembly operations **106** involve operators **104** entering aircraft **100** in a current state of aircraft **100** to perform assembly operations **106** with parts **108**. In the illustrative example, assembly operations **106** are performed using installation plans **112**. Installation plans **112** determine what assembly operations **106** are to be performed using parts **108**. For example, installation plans **112** may define how parts **108** are to be assembled, inspected, tested, or some combination thereof to manufacture aircraft **100**. For example, installation plans **112** may include instructions to assemble parts **108**, engineering drawings, inspection instructions, images of assembled parts, and other suitable information.

In the illustrative example, visualizer **114** provides visual aid **116** to operator **122** in operators **104** to perform assembly operation **110** in assembly operations **106**. As depicted, visualizer **114** may be implemented in software, hardware, firmware or a combination thereof. When software is used, the operations performed by visualizer **114** may be implemented in program code configured to run on hardware, such as a processor unit. When firmware is used, the operations performed by visualizer **114** may be implemented in program code and data and stored in persistent memory to run on a processor unit. When hardware is employed, the hardware may include circuits that operate to perform the operations in visualizer **114**.

In the illustrative examples, the hardware may take the form of a circuit system, an integrated circuit, an application specific integrated circuit (ASIC), a programmable logic device, or some other suitable type of hardware configured to perform a number of operations. With a programmable logic device, the device may be configured to perform the number of operations. The device may be reconfigured at a later time or may be permanently configured to perform the number of operations. Examples of programmable logic devices include, for example, a programmable logic array, a programmable array logic, a field programmable logic array, a field programmable gate array, and other suitable hardware devices.

Additionally, the processes may be implemented in organic components integrated with inorganic components and may be comprised entirely of organic components excluding a human being. For example, the processes may be implemented as circuits in organic semiconductors.

In this illustrative example, visualizer **114** is implemented in computer system **118**. Computer system **118** includes one or more computers. These computers may be a computer such as a desktop personal computer, a workstation, a server computer, or some other type of computer.

Additionally, computer system **118** also may include mobile data processing system **120**. Mobile data processing system **120** may be carried by operator **122** in operators **104**. In these illustrative examples, mobile data processing system **120** may be hand-held, portable, or take some other form that may be carried by operator **122**. Mobile data processing system **120** may be selected from one of a tablet computer, a mobile phone, a laptop computer, or some other data processing system that may be carried by operator **122**.

In this illustrative example, visualizer **114** provides visual aid **116** using display system **124.** As depicted, display system **124** is located in mobile data processing system **120**. Display system **124** may be comprised of one or more display devices. A display device in display system **124** may be selected from one of a liquid crystal display (LCD), a light-emitting diode (LED) display, an organic light-emitting diode (OLED) display, or some other suitable type of display device.

In this illustrative example, mobile data processing system **120** is carried by operator **122** into aircraft **100** during assembly of aircraft **100**. Mobile data processing system **120** is used by operator **122** to obtain visual aid **116** to perform assembly operation **110** in these illustrative examples. As depicted, assembly operation **110** may be performed following installation plan **126** in installation plans **112**. In other words, operator **122** uses mobile data processing system **120** in location **127** relative to aircraft **100** to perform assembly operation **110**.

As depicted, visualizer **114** provides visual aid **116** in assembling aircraft **100**. In this illustrative example, visualizer **114** displays display **128** for portion **130** of aircraft **100** on display system **124** in mobile data processing system **120**. In the illustrative example, portion **130** of aircraft **100** is selected from one of an interior of aircraft **100** or an exterior of aircraft **100**. Portion **130** may include some or all of aircraft **100**.

As depicted, display **128** is displayed within graphical user interface **132** on display system **124** in mobile data processing system **120**. In the illustrative example, display **128** for portion **130** provides visualization **134** in the form of visual aid **116** in a manner that uses fewer resources as compared to current techniques that display a model or models for an entire aircraft.

In this manner, operator **122** may carry mobile data processing system **120** and view display **128** for portion **130** of aircraft **100** when moving to location **127** in aircraft **100**. In this example, portion **130** includes location **127** in which operator **122** performs assembly operation **110**. With visualization **134,** operator **122** may perform assembly operation **110** more quickly than with currently used systems for guiding operator **122.**

Additionally, display **128** is generated on display system **124** in mobile data processing system **120** in a manner that reduces the resources needed to provide portability in providing display **128.** The amount of resources is reduced as compared to currently used techniques that display a model or models of an entire aircraft that are viewable by an operator at a data processing system such as a workstation.

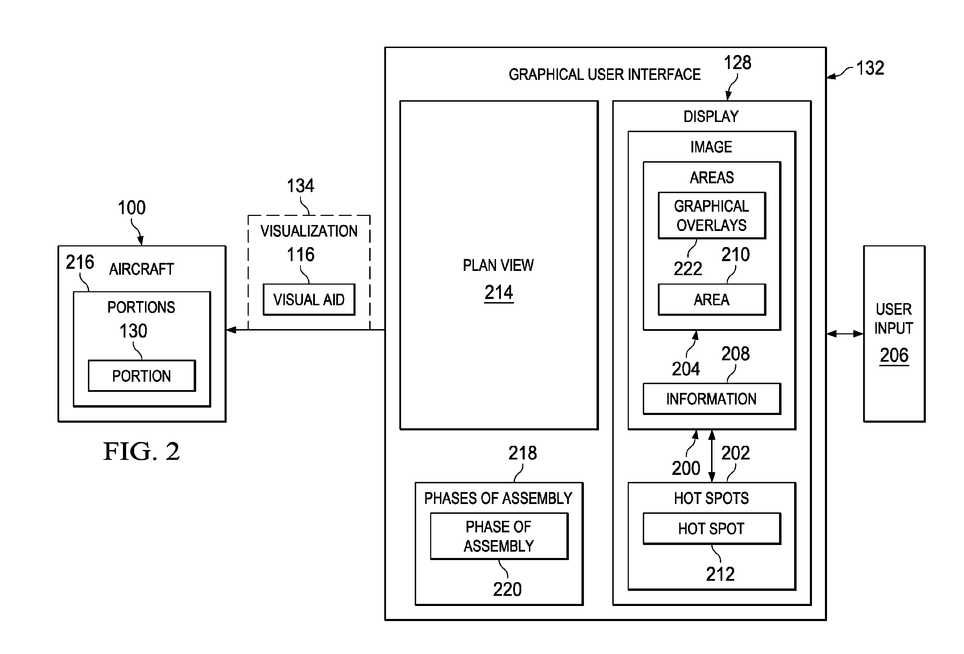

With reference now to **Figure 2****,** an illustration of a block diagram of a graphical user interface displayed on a display system is depicted in accordance with an illustrative embodiment. As depicted, one manner in which display **128** may be generated by visualizer **114** in **Figure 1** is shown in this figure. In the illustrative examples, the same reference numeral may be used in more than one figure. This reuse of the reference numeral in different figures represents the same element being present in the different figures.

As depicted, display **128** is displayed in graphical user interface **132** and comprises image **200** of portion **130** of aircraft **100** and hot spots **202** over areas **204** of image **200**. In this illustrative example, hot spots **202** correspond to installation plans **112** in **Figure 1** for areas **204** over which hot spots **202** are located on image **200**. Visualizer **114** in **Figure 1** displays hot spots **202** using graphical overlays **222** in association with areas **204** of image **200** where assembly operations **106** are planned based on installation plans **112** in **Figure 1**. As depicted, graphical overlays **222** are graphical indications of hot spots **202**. In other words, graphical overlays **222** allow an operator to see where hot spots **202** are located. In the illustrative example, hot spots **202** are selectable by user input **206**.

A graphical overlay is considered to be associated with an area when the graphical overlay is displayed in the area, on the area, near the area, or in some other manner that draws the attention of a person viewing the graphical overlay to the area of which the graphical overlay is associated. Graphical overlays **222** may take various forms. For example, graphical overlays **222** may take the form of icons, texts, colors, animations, lines, images, or other suitable types of graphical overlays.

Additionally, display **128** also includes information **208** about installation plan **126** in **Figure 1** for area **210** in areas **204** when hot spot **212** in hot spots **202** corresponding to area **210** is selected by user input **206.** User input **206** may take various forms. For example, user input **206** may be at least one of a rollover, a pointer hovering over hot spot **212**, a mouse click when a pointer is over hot spot **212**, or some other suitable type of user input. As used herein, the phrase "at least one of," when used with a list of items, means different combinations of one or more of the listed items may be used and only one of each item in the list may be needed. In other words, at least one of means any combination of items and number of items may be used from the list but not all of the items in the list are required. The item may be a particular object, thing, or a category.

For example, without limitation, "at least one of item A, item B, or item C" may include item A, item A and item B, or item B. This example also may include item A, item B, and item C or item B and item C. Of course, any combinations of these items may be present. In some illustrative examples, "at least one of" may be, for example, without limitation, two of item A; one of item B; and ten of item C; four of item B and seven of item C; or other suitable combinations.

The display of information **208** in display **128** provides visual aid **116** that enables performance of assembly operation **110** in area **210** that is selected in **Figure 1****.** Further, in this illustrative example, visualizer **114** in **Figure 1** may display plan view **214** in graphical user interface **132.** In this illustrative example, plan view **214** is an orthographic projection of a three-dimensional object, such as aircraft **100,** from the position of a horizontal plane through aircraft **100.** In other words, plan view **214** is a section viewed from the top of aircraft **100.**

As depicted, visualizer **114** displays plan view **214** of aircraft **100** in which plan view **214** represents portions **216** of aircraft **100** that are selectable to present display **128** for portion **130** of aircraft **100** selected from portions **216** in plan view **214.** In response to the selection of portion **130** from plan view **214**, visualizer **114** displays display **128** corresponding to portion **130** selected from portions **216** of aircraft **100**.

Further, visualizer **114** also may display phases of assembly **218** for aircraft **100** that are selectable. The selection of phase of assembly **220** from phases of assembly **218** causes image **200** for portion **130** as selected to correspond to phase of assembly **220.** For example, the selection of a portion of a passenger cabin in a phase of assembly that is prior to the installation of seats results in image **200** that is used in display **128** to show the passenger cabin without seats.

In this manner, graphical user interface **132** with at least one of display **128,** plan view **214,** and phases of assembly **218** may provide visualization **134** of aircraft **100.** As depicted, visualization **134** takes the form of visual aid **116** that may be used by operator **122** while operator **122** is in a location inside or outside of aircraft **100.**

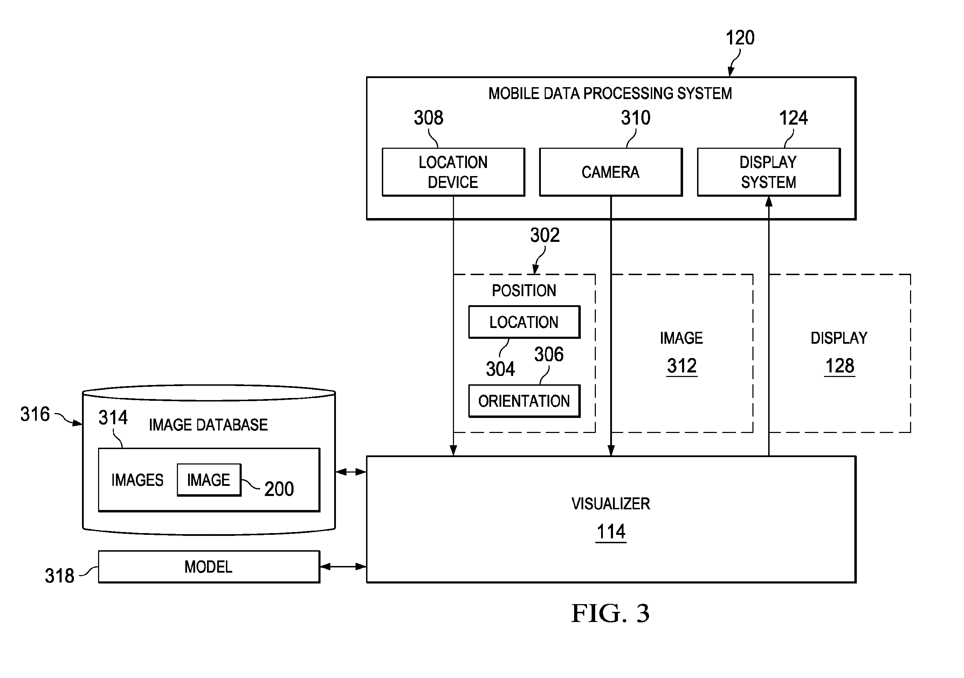

Turning next to **Figure 3****,** an illustration of data flow used to generate a display based on identification of the position of the mobile data processing system is depicted in accordance with an illustrative embodiment. In the illustrative example, visualizer **114** may identify position **302** of mobile data processing system **120.** In the illustrative example, position **302** of mobile data processing system **120** may be used to identify which of images **314** are used for generating display **128.** In particular, position **302** may be used to identify image **200** from images **314**.

In this illustrative example, position **302** describes location **304** of mobile data processing system **120.** In the illustrative example, position **302** is identified relative to aircraft **100** in **Figure 1****.** For example, position **302** may be outside of aircraft **100** or inside of aircraft **100.**

As depicted, location **304** may be described using coordinates such as those used in a Cartesian coordinate system. Additionally, position **302** also may include orientation **306** of mobile data processing system **120**.

In these illustrative examples, location **304** may be identified using a number of different types of mechanisms. For example, location **304** may be identified using location device **308** in mobile data processing system **120.** Location device **308** may be, for example, a global positioning system receiver in mobile data processing system **120**. The global positioning system receiver may send position **302** to visualizer **114.**

In another illustrative example, mobile data processing system **120** may include camera **310**. Camera **310** may generate image **312** of aircraft **100** while operator **122** in **Figure 1** carries mobile data processing system **120** inside or outside of aircraft **100**.

Camera **310** sends image **312** to visualizer **114.** In this illustrative example, camera **310** may be a stereo camera or other suitable type of camera. Visualizer **114** may use image **312** to identify position **302** of mobile data processing system **120** relative to aircraft **100**. For example, image **312** may be compared to images **314** of aircraft **100** in image database **316.** Images **314** are images that may be used to generate display **128** in the illustrative example.

As depicted, image **312** may be compared to images **314** to identify an image with the images **314** for use in generating display **120.** The comparison may be made using currently available image comparison techniques. The comparison is performed to find an image in images **314** that is closest to image **312**. Currently used image comparison techniques include, for example, without limitation, image subtraction, color overlay and image flashing or alternating, or other suitable techniques.

For example, image subtraction algebraically combines the magnitude of each point or pixel of the reference image and test image so that like parts cancel and only differences remain. In the color overlay approach, each image is filtered with a different color so that differences appear in one or the other color and like parts appear as a blend of both colors. In image flashing, first one and then the other image is flashed on a screen: like parts remain steady, while differences blink.

In one illustrative example, images **314** may be generated in a manner that allows for distances between points in images **314** to be identified. For example, images **314** may be sets of images. Each set of images in images **314** may be taken from offset positions such as with a stereo camera. Knowing the offset distance between the cameras generating the images allows for measuring distances. This offset distance may be included as part of the set of images. The operator may then obtain point-to-point measurements for aircraft **100** when images **314** are taken from aircraft **100**.

As depicted, pixels in the images may be scaled with respect to known distances from computer aided (CAD) models. Distances between different features for objects in a location in an image may be identified from the computer aided model of the location. These distances may be used to scale pixels to provide an ability to identify distances from selecting points in the image. In other words, the pixels in the image may be correlated to distances. The distance between pixels for different points for object may be identified using a computer aided design model of the object. In this manner, the selection of pixels at different points in an image may be used to identify distances between those points selected.

Alternatively, a point cloud may be generated for the objects in the location. The point cloud may then be correlated to images for the location.

In one illustrative example, the display of image **200** also may include displaying another image taken at the same time from the position offset from image **200.** With this type of implementation, display system **124** may be this type of device that allows for viewing a set of images on an auto-stereoscopic display device. This type of device allows for viewing a set of images to provide an ability to measure distances between points selected in a set of images.

In this manner, the distance measurements may be generated from display **128**. Currently available techniques to be used to generate images **314** in which measurements may be made by selecting points within images **314.** For example, identifying distances from computer aided design models and correlating those distances within those computer-aided design models to images **314,** generating point clouds, or other techniques may be used.

Visualizer **114** may correlate image **312** generated by camera **310** in mobile data processing system **120** to one of images **314** to identify position **302** of mobile data processing system **120**. In another illustrative example, visualizer **114** may perform object recognition to identify parts **108** that are in image **312**. Currently used object detection techniques may be used. These techniques may include approaches based on computer-aided design like object model methods, appearance based methods, feature based methods, and other suitable techniques.

Computer-aided design like object model based methods may compare images to features in computer-aided design models. Appearance based methods may involve using example images in the form of templates or exemplars of the objects to be recognized. Feature based methods may include searching defined matches between object features and features in an image. Other techniques also include using genetic algorithms, neural networks and other to detect objects

The identification of parts **108** may then be compared to model **318** for aircraft **100**. Model **318** may be, for example, a computer aided design (CAD) model. Based on this comparison, visualizer **114** may identify position **302** of mobile data processing system **120**.

With position **302**, visualizer **114** identifies image **200** from images **314** in image database **316** for generating display **128.** As depicted, images **314** are formed from combining photographic images with overlapping fields of view for aircraft **100.** For example, image **200** is formed from combining photographic images with overlapping fields of view for portion **130** of aircraft **100.** The creation of image **200** may be performed using various image combining processes such as image stitching or photo stitching.

With the identification of image **200,** visualizer **114** generates display **128** of portion **130** of aircraft **100** as identified using image **200** of portion **130** of aircraft **100** and hot spots **202** over areas **204** of image **200** in **Figure 2** based on position **302** of mobile data processing system **120.** Visualizer **114** then sends display **128** to mobile data processing system **120** for display on display system **124**. In an illustrative example, mobile data processing system **120** may be a tablet computer, a mobile phone, or some other suitable type of mobile data processing system. Display system **124** may take the form of a touchscreen allowing for gestures to be used to interact with display **128**.

In this manner, visualizer **114** identifies display **128** of portion **130** that is relevant to where operator **122** is located based on position **302** of mobile data processing system **120**. Display **128** may change as operator **122** moves to different places in or on aircraft **100**. Identification of images based on position **302** may be made using image comparison techniques as described above. Additionally, other position identification techniques also may be used. For example, an indoor positioning system based on sensor data may be used. For example, magnetic positioning, dead reckoning, optical signals, radio signals, acoustic signals, and other types of information may be used to identify the location of mobile data processing system **302**. The systems typically use translation in which three measurements are made.

For example, a wireless positioning system may be used in which wireless access points transmit signals that have selected intensities. Each wireless access point may have a different intensity at which wireless signals are transmitted. As a result, mobile data processing system **120** may identify a distance to a particular wireless access point based on signal strength. When the distances are identified to two or more wireless access points, those distances may then be used to identify position **302** of mobile data processing system **120.**

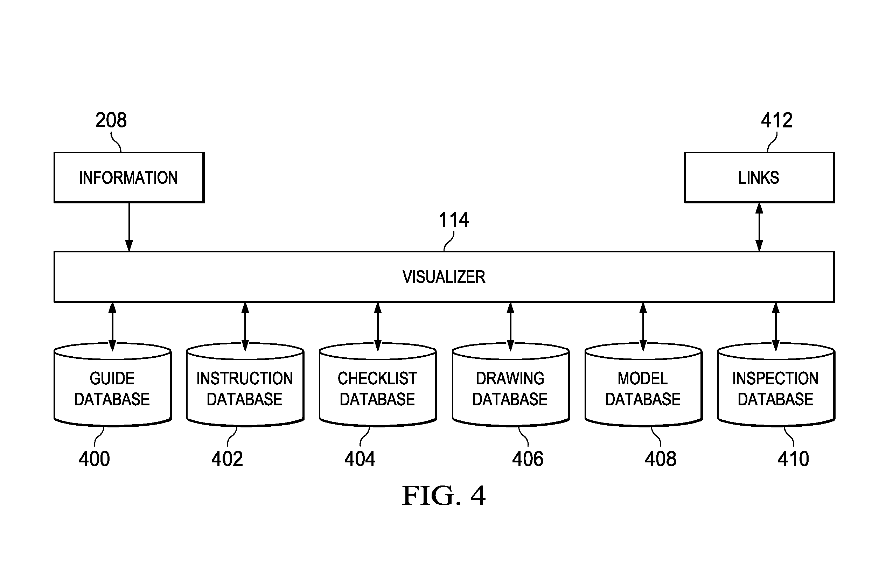

Turning next to **Figure 4****,** an illustration of a block diagram of data flow used to generate information is depicted in accordance with an illustrative embodiment. Visualizer **114** also identifies information **208** for display system **124** in **Figure 1****.** Information **208** may be identified based on position **302** of mobile data processing system **120** with respect to aircraft **100.** This position may be identified using various techniques described above. These techniques include, for example, comparing an image generated by a mobile data processing system with images of the aircraft, a wireless positioning system, a dead reckoning system, or other suitable types of systems that may be used to identify position **302** of mobile data processing system **120**.

As depicted, information **208** is information for installation plan **126** in **Figure 1**. Information **208** is identified for display **128** based on installation plan **126** that is associated with hot spot **212** selected by user input **206** shown in **Figure 2****.** Information **208** may take a number of different forms.

For example, information **208** may include at least one of a guide to locate parts **108** installed during assembly of aircraft **100** in **Figure 1****;** instructions for assembling a group of parts **108,** a checklist of parts **108,** a group of links that are selectable to display at least one of an engineering drawing, a computer aided design model, or inspection data, or other suitable types of information.

In this illustrative example, visualizer **114** may obtain information **208** from a number of different sources. For example, visualizer **114** may access at least one of guide database **400,** instruction database **402,** checklist database **404,** drawing database **406,** model database **408,** inspection database **410,** or some other suitable source of information.

As depicted, guide database **400** may include drawings, descriptions, photos, videos, and other information that may be used to guide an operator to the location of the group of parts for an installation plan. Instruction database **402** may include written instructions, photos, videos, and other information to tell an operator how to assemble a group of parts, inspect a group of parts, or perform some other operations according to the installation plan for which the information is identified.

As depicted, checklist database **404** includes checklists from which the checklist for the installation plan is identified for use in displaying information **208.** The checklist may identify operations, parts, or other information that should be checked during an assembly operation.

Drawing database **406** is a database of engineering drawings. In these illustrative examples, these drawings may be two-dimensional drawings for parts in which operations are to be performed from the installation plan.

In the illustrative example, model database **408** is a database of models for a group of parts. These models may be for a part or an assembly of parts. An installation plan is associated with a group of models in model database **408.** In this manner, the models that may be displayed may be smaller in size rather than providing access to a model of an entire aircraft or a large portion of the aircraft including parts that are not part of the installation plan. For example, a model for an installation plan may be a model of a luggage bin, a window, a seat, or some other group of parts in the installation plan.

Access to information in these databases may occur through links **412** that are generated by visualizer **114** and included in information **208.** As depicted, links **412** are pointers to the information in one of the databases. Links **412** may be, for example, universal resource locators (URLs).

As a result, the amount of information that is stored or processed by mobile data processing system **120** in **Figure 1** may be reduced as compared to currently used techniques. As a result, an ability to obtain information for a particular installation plan is provided to an operator in a manner such that the operator is able to access this information when moving inside or outside of the aircraft to perform one or more operations for the installation plan.

The illustration of aircraft manufacturing environment **102** and the different components in **Figures 1-4** are not meant to imply physical or architectural limitations to the manner in which an illustrative embodiment may be implemented. Other components in addition to or in place of the ones illustrated may be used. Some components may be unnecessary. Also, the blocks are presented to illustrate some functional components.

One or more of these blocks may be combined, divided, or combined and divided into different blocks when implemented in an illustrative embodiment.

For example, computer system **118** is shown as having a single data processing system. One or more mobile data processing systems in addition to mobile data processing system **120** may be present in computer system **118.**

As another example, visualizer **114** may be located in at least one of mobile data processing system **120,** another computer in computer system **118,** or distributed through different computers in computer system **118.** When visualizer **114** is located in another computer other than mobile data processing system **120,** visualizer **114** generates display **128** and sends display **128** to mobile data processing system **120** to present to operator **122** on display system **124.** In another illustrative example, visualizer **114** may be distributed across multiple computers including mobile data processing system **120.**

In still another example, information **208** may include other types of information from other databases in addition or in place of guide database **400,** instruction database **402,** checklist database **404,** drawing database **406,** model database **408,** or inspection database **410.** For example, a video database showing performance of an assembly operation may be used by visualizer **114** to identify information **208** for display **128** in graphical user interface **132.**

As another example, display **128** may be displayed on other data processing systems other than mobile data processing system **120**. For example, display **128** may be displayed on a display system for a desktop computer, a workstation, or some other suitable type of data processing system.

In yet another illustrative example, in place for using sets of images generated using a stereo camera, a point cloud may be generated for the images. In other words, each image used for a display has a point cloud associated with the image. The point cloud is used to identify locations of points in the image and may be used to generate point-to-point measurements for points selected in the image.

The point cloud is a set of data points in the coordinate system in which the data points are generated using a three-dimensional scanner. The three-dimensional scanner may be, for example, a laser that generates measurements that identify different points on the surface of an object. This point cloud may be correlated to the image and used to identify distances between points when user input selecting two points in the image is received.

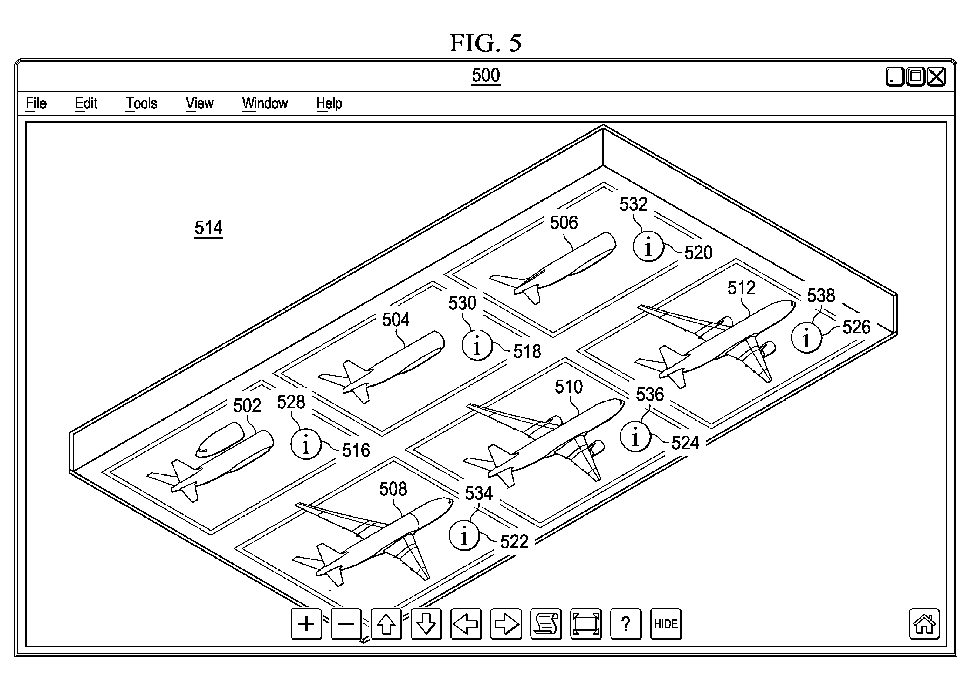

With reference next to **Figures 5-11****,** an illustration of a graphical user interface displaying visual aids for use by an operator to perform an assembly operation for installation plan is depicted in accordance with an illustrative embodiment. With reference first to **Figure 5****,** an illustration of a graphical user interface for displaying a visual aid is depicted in accordance with an illustrative embodiment. As depicted, graphical user interface **500** is an example of one implementation for graphical user interface **132** in **Figure 1****.**

As depicted, phases of assembly are displayed in graphical user interface **500.** These phases of assembly are represented by station **502,** station **504,** station **506,** station **508,** station **510,** and station **512** as shown in image **514** in graphical user interface **500.** In the illustrative example, each station is depicted by an aircraft in a particular phase of assembly at a station in image **514.**

Each of these stations is selectable through a hot spot. As depicted, hot spot **516,** hot spot **518,** hot spot **520,** hot spot **522,** hot spot **524,** and hot spot **526** are shown using graphical overlay **528,** graphical overlay **530,** graphical overlay **532,** graphical overlay **534,** graphical overlay **536,** and graphical overlay **538** that are displayed in association with station **502,** station **504,** station **506,** station **508,** station **510,** and station **512,** respectively.

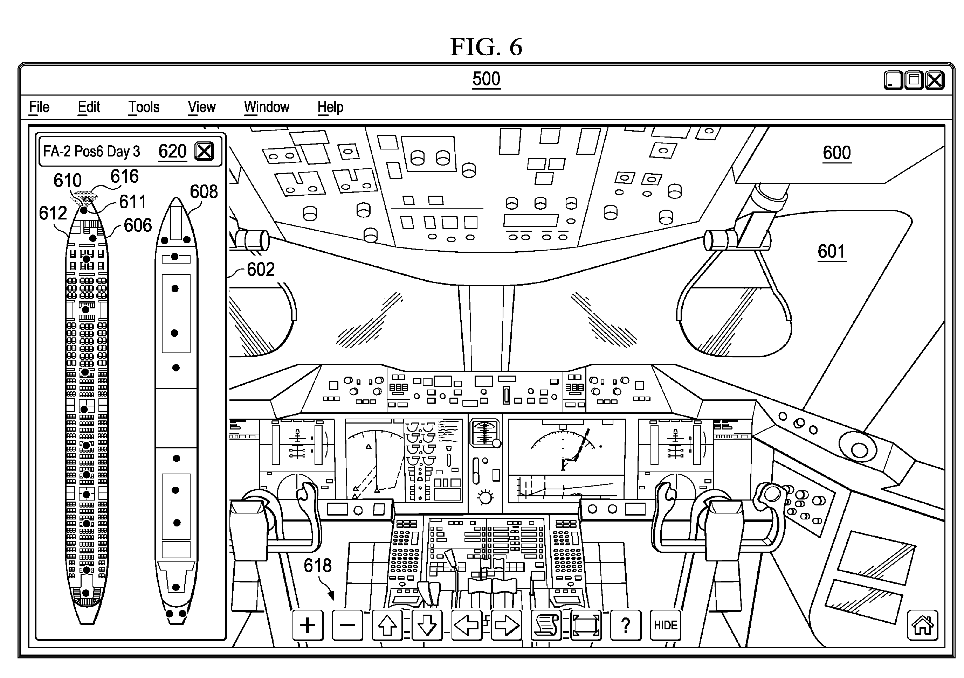

With reference now to **Figure 6****,** an illustration of a graphical user interface displaying a visual aid is depicted in accordance with an illustrative embodiment. In this figure, station **512** shown in image **514** has been selected through user input selecting hot spot **526 in** **Figure 5****.**

In this example, display **600** in graphical user interface **500** includes image **601** of the cockpit in the aircraft. Display **600** is shown in this illustrative example as a default starting point after a phase of assembly has been selected through the selection of a station in **Figure 5****.**

Additionally, plan view **602** is displayed in graphical user interface **500.** As depicted, plan view **602** is a plan view of an aircraft. Plan view **602** illustrates portions of the aircraft that may be selected for obtaining visual aids in forming an assembly operation. As seen in this view, portions are shown on level **606** and level **608** of the aircraft. In this illustrative example, level **606** is a passenger area while level **608** is a cargo area for the aircraft. Plan view **602** displayed in graphical user interface **500** may receive user input to select a particular portion of the aircraft. The selection of the portion is made using hot spots as seen through the graphical overlays.

In the illustrative example, each of these hot spots shows a portion of the aircraft that may be viewed with a display. A portion corresponding to a hot spot may be selected to present in display **600** in a manner that includes an image of the portion selected.

For example, graphical overlay **610** represents hot spot **611** for portion **612** of the aircraft as shown in plan view **602.** In this illustrative example, image **601** is the cockpit of the aircraft in display **600.** Further, graphical indicator **616** in plan view **602** indicates which part of portion **612** is being viewed in image **601.** As depicted, graphical indicator **616** is a color. As depicted, image **601** may be navigated 360 degrees around and 180 degrees vertically in the illustrative example. When the view changes, graphical indicator **616** displayed in plan view **602** also changes to correspond to the current view as seen in image **601.**

The navigation in this illustrative example may occur using controls **618** which are used to navigate image **601** displayed. Other mechanisms other than user input to control controls **618** using a mouse or gestures on a touch screen may be used. For example, a keyboard, a trackball, a joystick, touchscreen, or some other device may be used to navigate image **601.** Also, phase of assembly identifier **620** identifies the phase of assembly that is displayed.

In another illustrative example, camera **310** in mobile data processing **120** generates image **312.** Image **312** is compared with images **314** in image database **316** in which images **314** includes images of aircraft **100** in different phases of assembly. The comparison is made to identify the phase of assembly for aircraft **100.** If a comparison does not yield a match, the operator may be prompted to select a phase of assembly using plan view **602.**

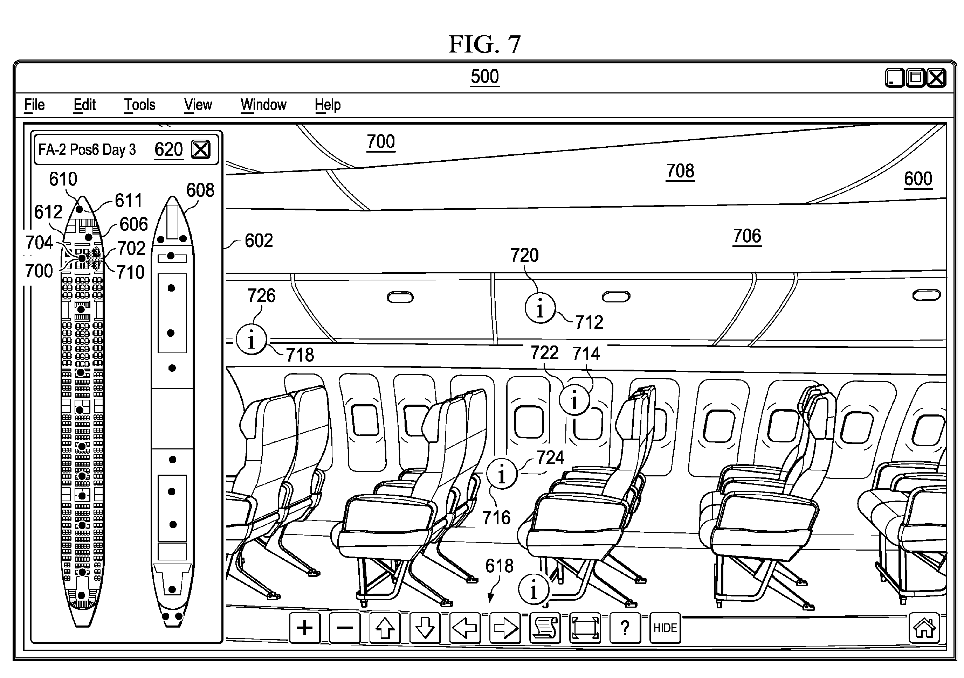

In **Figure 7****,** an illustration of a display of a portion of an aircraft is depicted in accordance with an illustrative embodiment. In this figure, hot spot **700** in plan view **602** has been selected for viewing portion **702** of the aircraft. In this illustrative example, hot spot **700** is shown in plan view **602** in graphical user interface **500** using graphical overlay **704**.

The selection of hot spot **700** results in graphical user interface **500** showing display **706.** Display **706** includes which of image **708** is for portion **702** of the aircraft as shown in plan view **602.**

Also, graphical indicator **710** is displayed on plan view **602** and indicates the view of portion **702** displayed in image **708.** As depicted, graphical indicator **710** is a color. In this example, graphical indicator **710** indicates that the port side of portion **702** is shown in image **708.**

In the illustrative example, hot spot **712,** hot spot **714,** hot spot **716,** and hot spot **718** are displayed using graphic overlay **720,** graphic overlay **722,** graphic overlay **724,** and graphic overlay **726** on image **708.** These hot spots correspond to installation plans. The selection of one of the hot spots causes a display of information for an installation plan that corresponds to the selected hot spot.

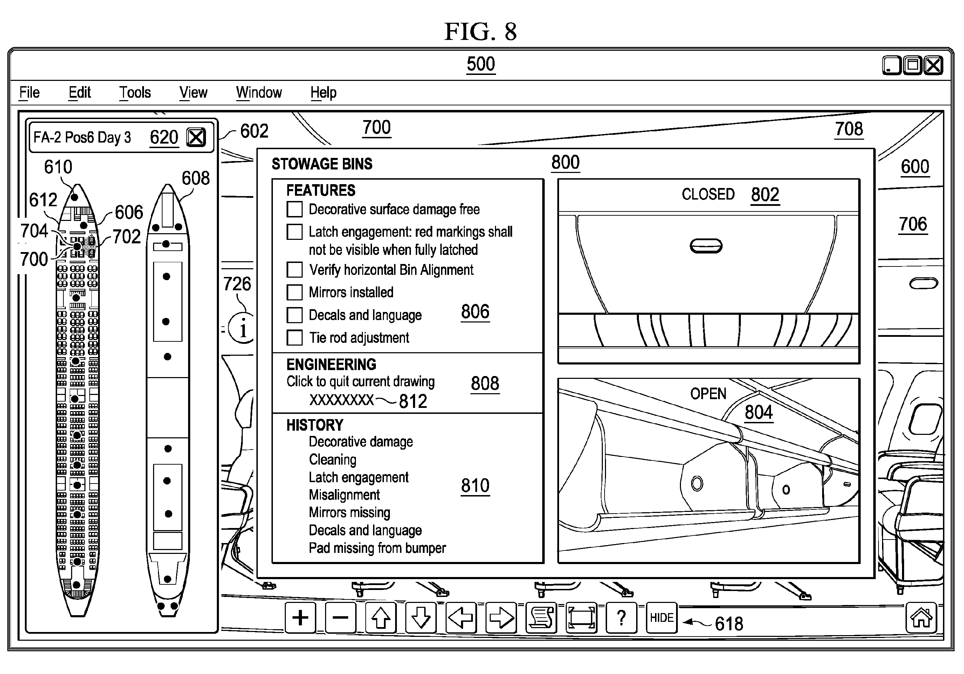

Turning now to **Figure 8****,** an illustration of information displayed for an installation plan is depicted in accordance with an illustrative embodiment. In this view, hot spot **712** (not shown in this view) has been selected and information about the installation plan is displayed in popup window **800**. Image **802** and image **804** are pictures of a stowage bin for the installation plan. In this illustrative example, image **802** shows a stowage bin in a closed position, while image **804** shows a stowage bin in an open position.

Additionally, the information in popup window **800** also includes a checklist in section **806,** engineering information in section **808,** and a history of issues in section **810.** The checklist shows features that should be checked for the stowage bin in the installation plan.

As depicted, section **808** includes link **812** to access engineering drawings for the bin. The history of issues in section **810** lists issues that have occurred in previous installations of the bin.

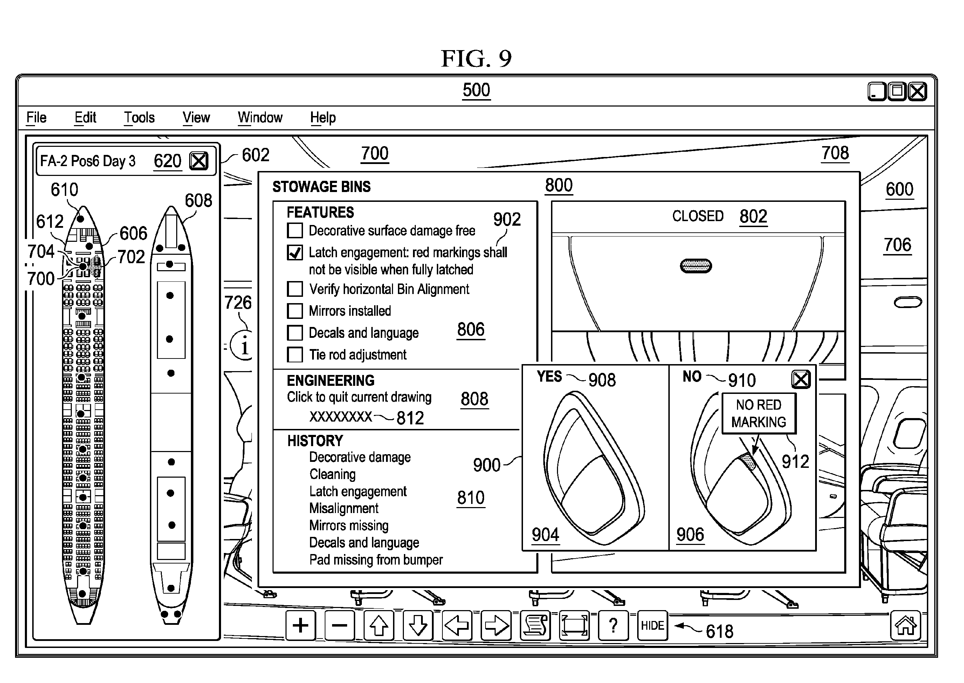

With reference now to **Figure 9****,** an illustration of information displayed for an installation plan is depicted in accordance with an illustrative embodiment. In this figure, graphical user interface **500** displays popup window **900.** Popup window **900** is displayed when item **902** is selected from the checklist in section **806.** In this illustrative example, item **902** indicates when markings should not be visible on a latch for the stowage as an item that should be checked.

As depicted, popup window **900** shows image **904** and image **906** of a portion of a stowage bin. In this illustrative example, callout **908** on image **904** provides a visual aid to a correct installation for a latch. Callout **910** on image **906** indicates that the image is one of an incorrect installation of a latch. Additionally, callout **912** indicates the red marking on the latch should not be seen when the stowage bin is in a closed position.

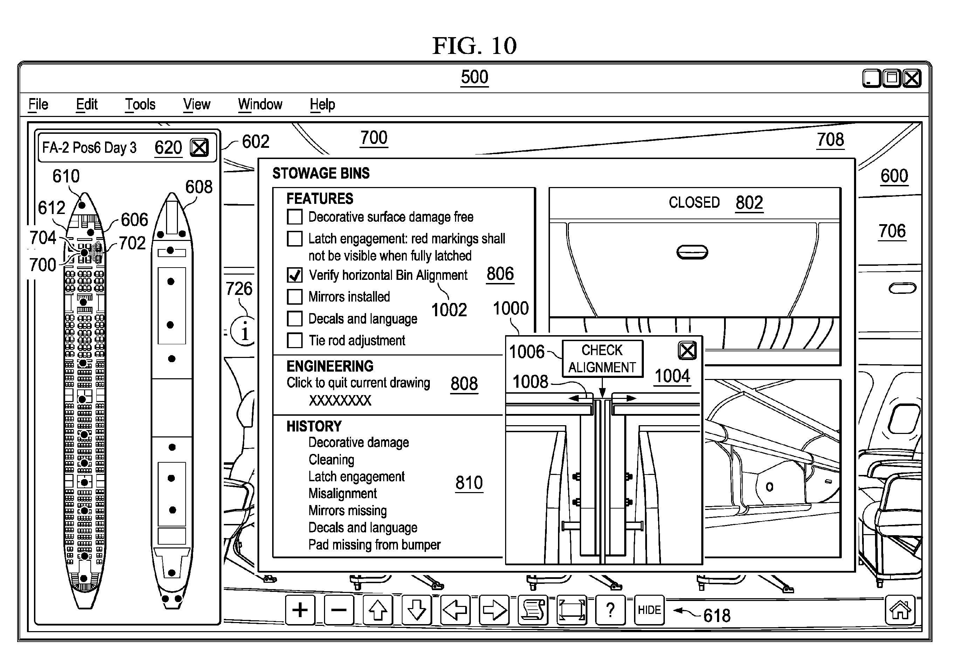

With reference now to **Figure 10****,** an illustration of information displayed for an installation plan is depicted in accordance with an illustrative embodiment. In this figure, graphical user interface **500** displays popup window **1000**.

Popup window **1000** is displayed when item **1002** is selected from the checklist in section **806**. In this illustrative example, item **1002** indicates that the alignment of the stowage bin should be checked.

As depicted, popup window **1000** shows image **1004** of a portion of a stowage bin. In this illustrative example, callout **1006** on image **1004** provides a visual aid as to what should be measured for item **1002** in the checklist. Also, arrow **1008** shows the direction in which the alignment should be checked for item **1002** on the checklist.

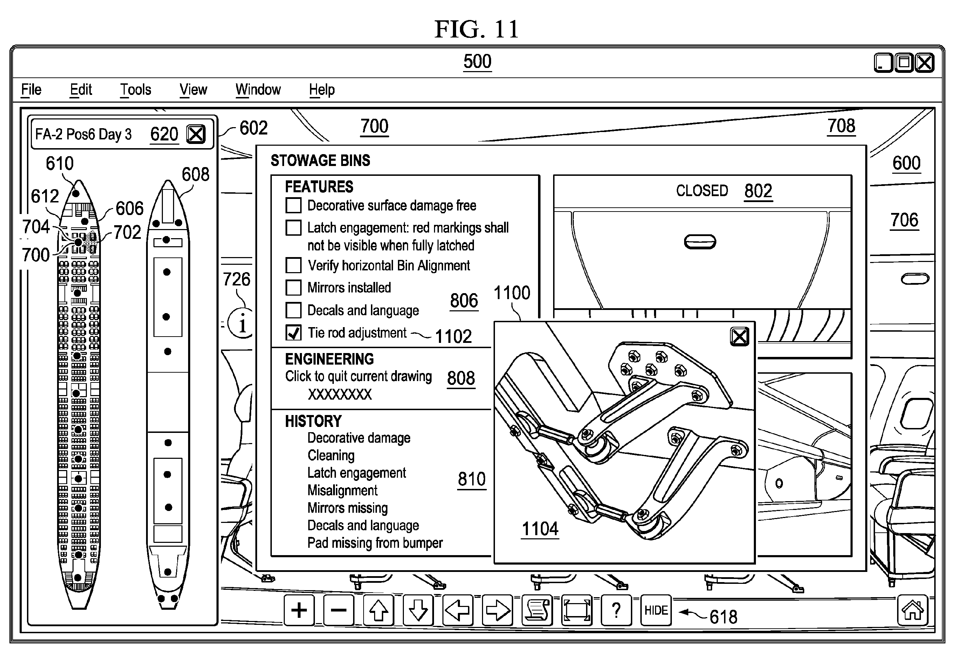

Turning next to **Figure 11****,** an illustration of information displayed for an installation plan is depicted in accordance with an illustrative embodiment. In this illustrative example, graphical user interface **500** displays popup window **1100.** Popup window **1100** is displayed when item **1102** is selected from the checklist in section **806**. Popup window **1100** shows image **1104** of tie rods for the stowage bin.

Some items in the checklist are presented only for some phases of assembly and may not be visible or accessible in other phases of assembly. Detailed popup windows, such as popup window **1000** and popup window **1100**, are provided as guides to perform at least one of inspection, installation, or other types of operations. In this manner, visual aids may be provided for each phase of assembly for an aircraft.

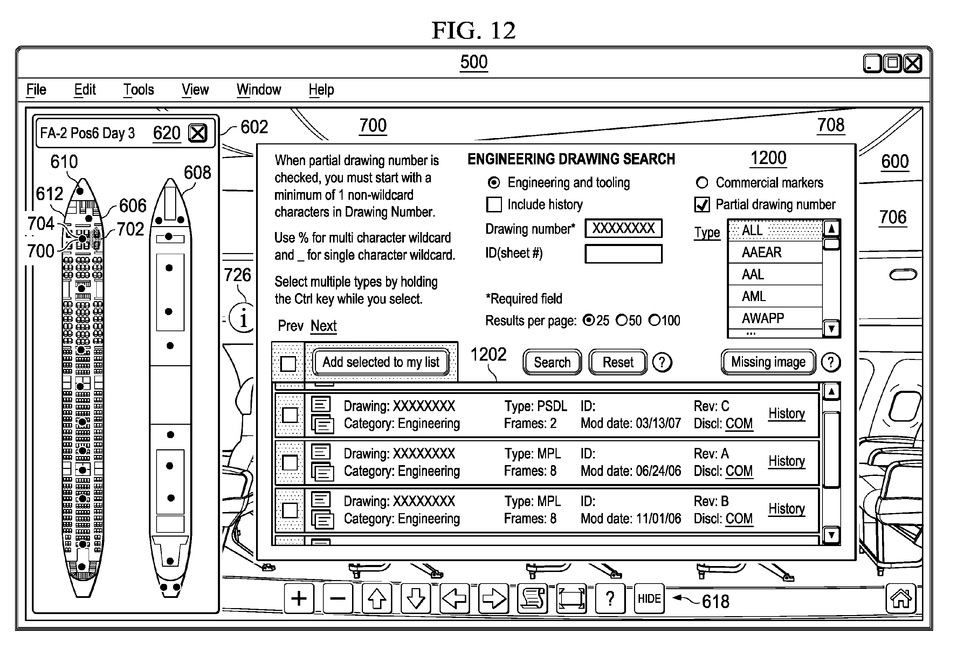

With reference next to **Figure 12****,** an illustration of information displayed for an installation plan is depicted in accordance with an illustrative embodiment. In this illustrative example, graphical user interface **500** displays popup window **1200** when link **812** in section **810** in **Figure 8** is selected.

In this illustrative example, popup window **1200** shows list **1202** of engineering drawings that may be displayed for providing additional information in performing assembly operations. List **1202** includes engineering drawings for stowage bins that may be applicable for installing stowage bins. These drawings may be two-dimensional or three-dimensional drawings. Three-dimensional drawings may be viewed using a model of the stowage bin. In the illustrative example, the model is for the part or assembly of parts, such as a stowage bin. Other parts of the aircraft are not included in the model in this illustrative example. In other illustrative examples, parts of the aircraft relevant to the stowage bin may be included to provide information needed for performing assembly operations for the stowage bin.

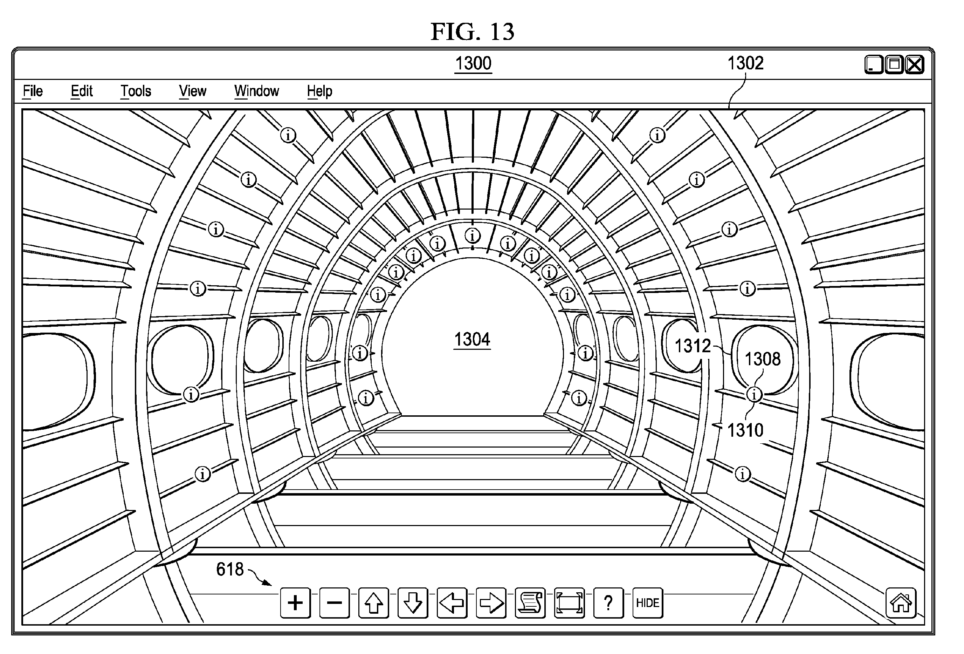

**Figures 13-15** are examples of other examples of a display of an image and information in a graphical user interface providing visual aids to an operator to perform an assembly operation. With reference next to **Figure 13**, an illustration of a display of a portion of an aircraft is depicted in accordance with an illustrative embodiment. In this example, graphical user interface **1300** is an example of another implementation for graphical user interface **132** shown in block form in **Figure 1****.**

As depicted, graphical user interface **1300** includes display **1302** in which image **1304** is shown in display **1302.** Image **1304** is an image of an interior of an aircraft. Image **1304** is at a stage of assembly where the fuselage is seen in image **1304.** As depicted, hot spots are displayed as graphical overlays for installation plans regarding the fuselage. In this illustrative example, graphical overlay **1308** is displayed for hot spot **1310** for an installation plan for window **1312** shown in the fuselage in image **1304**.

The location of graphical overlay **1308** serves as a visual guide to find the location in the aircraft to perform an assembly operation as set out by the installation plan. In other words, graphical overlay **1308** may serve as a guide to an operator to find window **1312** in the aircraft as shown in image **1304**. The operator may carry a mobile data processing system and view graphical user interface **1300** with image **1304** with graphical overlay **1308** associated with window **1312** while looking for the location of window **1312** in the aircraft. Graphical overlay **1308** is considered to be associated with window **1312** in image **1304** when the location, the look of graphical overlay **1308,** draws the attention of an operator to window **1312.**

Further, image **1304** shows other parts in the aircraft that may be used by the operator as a reference to find window **1312** while the operator is inside the aircraft. These assembly operations may include verifying locations for assembling parts, verifying locations for installation plans, performing inspections on parts that have been installed, and other suitable operations.

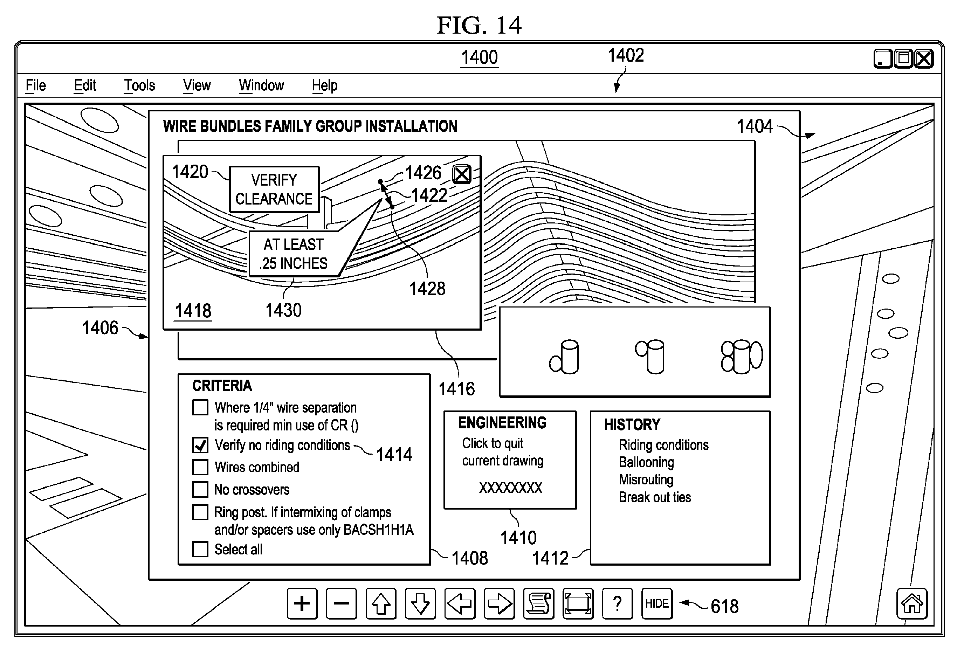

Turning next to **Figure 14****,** an illustration of a display of a portion of an aircraft is depicted in accordance with an illustrative embodiment. In this example, graphical user interface **1400** is an example of another implementation for graphical user interface **132** shown in block form in **Figure 1****.** In this example, display **1402** is shown in graphical user interface **1400.** Display **1402** includes image **1404** of the interior of the aircraft. In this example, popup window **1406** displays information relating to an installation plan for wire bundles in the aircraft. Section **1408** shows a checklist for a wire bundle, section **1410** has links to engineering drawings, and section **1412** has a history of issues relating to the installation plan.

In this depicted example, the selection of item **1414** from the checklist in section **1408** results in popup window **1416** being displayed in display **1402.** Popup window **1416** provides additional information about the installation plan regarding item **1414.** As depicted, popup window **1416** includes image **1418** of a wiring bundle in callout **1420** and arrow **1422** as visual aids. Callout **1420** directs the operator to verify a clearance and arrow **1422** shows where to make the measurement.

In this illustrative example, arrow **1422** is an example of a callout that may also be used to point out the distance that should be verified in addition to the instruction for item **1414** in the checklist. For example, the operator may select point **1426** and point **1428** on either side of arrow **1422.** The selection of point **1426** and point **1428** may provide callout **1430** which states that a separation of at least 0.25 inches is needed.

In this illustrative example, the selection of point **1426** and point **1428** results in an identification of the distance between those two points. This identification may be made for any two points in image **1404** when a second image in addition to image **1404** is present. In this example, the second image is taken from an offset of image **1404.** These two images form a set of images that may be used as a stereographic display allowing for point-to-point measurements to be made between points within image **1404.** In some illustrative examples, only image **1404** may be displayed and the second image is used to calculate the distance between the points.

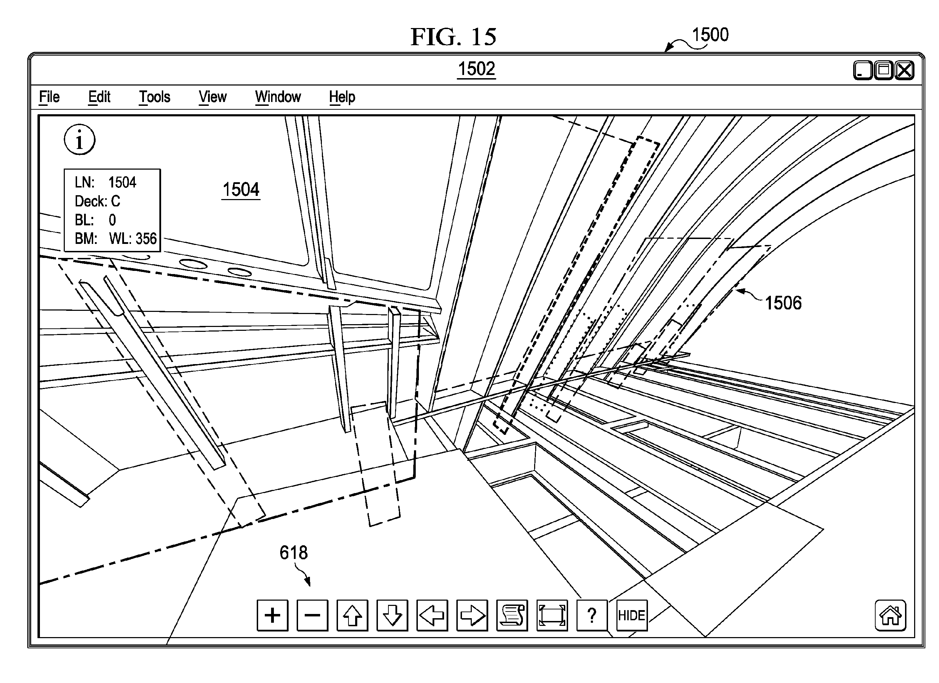

Turning next to **Figure 15****,** an illustration of a display of a portion of an aircraft is depicted in accordance with an illustrative embodiment. In this example, graphical user interface **1500** is an example of another implementation for graphical user interface **132** shown in block form in **Figure 1****.**

In this example, display **1502** displayed in graphical user interface **1500** includes image **1504** of a portion of an interior of an aircraft. In this example, hot spots for installation plans are displayed using graphical overlays **1506** in the form of color and icons.

In another example, image registration may be performed. In image registration, an image generated by a camera in a mobile data processing system, the portion of the interior of the aircraft is compared to images of the aircraft stored in an image database. Image comparison is used to identify an image, such as image **1504,** in the image database that corresponds to the image generated by a camera in the mobile data processing system. When image **1504** in the image database is identified, image **1504** may be overlaid with the image generated by the camera as part of forming display **1502**.

Differences between image **1504** and the image generated by the camera may be seen by the viewer. These differences may be emphasized by modifying at least one of image **1504** or the image generated by the camera. The modification may be, for example, displaying the image generated by the camera as a grayed-out image. In other words, the image generated by the camera may be displayed using shades of gray while image **1504** is displayed using color. In other illustrative examples, differences may be identified and emphasized using graphical indicators such as color, flashing pixels, or other suitable graphical indicators.

Graphical overlays **1506** may then be displayed on these two images. If the viewer sees differences between image **1504** and the image generated by the camera in an area with the graphical overlay, the viewer may obtain more information by selecting the graphical overlay to obtain information about an installation plan for that area.

In this manner, a viewer of display **1502** may visualize additional information through the use of image **1502** and the image generated by the camera. For example, if image **1502** is from a different phase of assembly from the image generated by the camera, these differences may be emphasized and seen in display **1502.** Graphical overlays **1506** graphically indicate where the installation plans are present in display **1502.**

As another illustrative example, overlaying image **1502** with the image from the camera may be used to identify differences in installation. For example, image **1502** may illustrate an assembly of parts assembled in a desired configuration. The image generated by the camera may be overlaid on image **1502** such that a viewer may visualize whether the actual installation of the parts are in the desired configuration.

The illustrations of the graphical user interfaces in **Figure 5-15** are shown to illustrate a few of implementations for graphical user interface **132** and may show display **128** in **Figure 1****.** These examples are not meant to limit the manner in which other illustrative embodiments may be depicted. For example, the displays shown in the figures are for an interior or an aircraft. Other illustrative examples may show an exterior of an aircraft. In yet another illustrative example, the information may be displayed in tool tips, additional sections in the original popup window, or other constructs in addition to or in place of the popup windows.

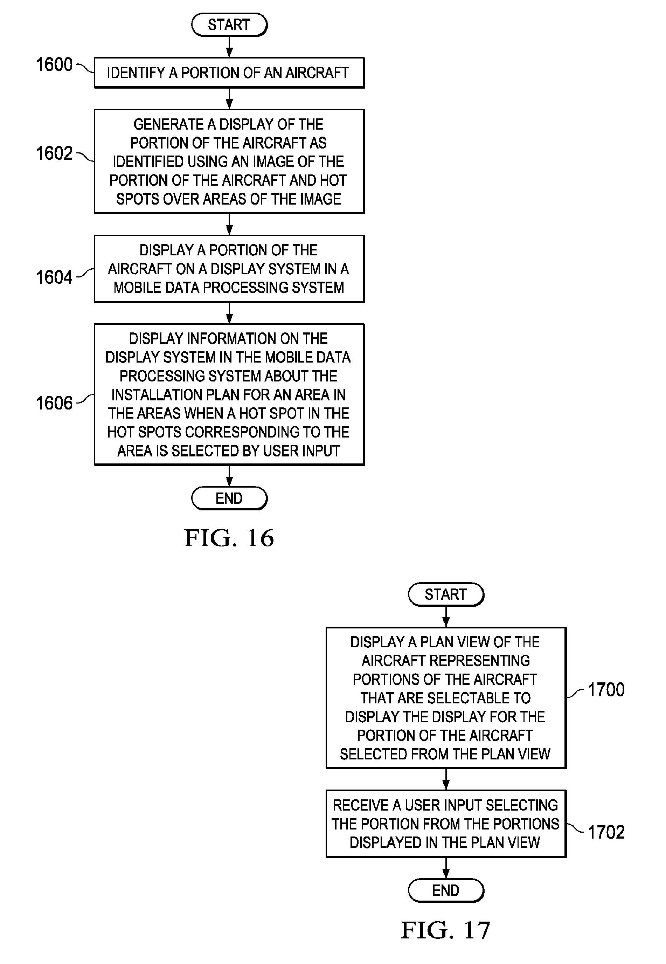

With reference to **Figure 16****,** an illustration of a flowchart of a process for a method for providing a visual aid in assembling an aircraft is depicted in accordance with an illustrative embodiment. The process illustrated in **Figure 16** may be implemented in aircraft manufacturing environment **102** in **Figure 1** to perform assembly operations **106**. The processes may be implemented using at least one of visualizer **114** or mobile data processing system **120** in **Figure 1****.**

The process begins by identifying a portion of an aircraft (operation **1600**). The portion may be identified in a number of different ways. For example, the portion may be identified from at least one of a user input selected portion or a position of a mobile data processing system relative to the aircraft. The process then generates a display of the portion of the aircraft as identified using an image of the portion of the aircraft and hot spots over areas of the image (operation **1602**). In operation **1602,** the hot spots may be displayed using overlays that are displayed on the areas, or in some other manner to draw attention to the areas to which the hot spots represent particular installation plans.

The process displays a portion of the aircraft on a display system in a mobile data processing system (operation **1604**)**.** In operation **1604,** the display on the display system comprises an image of the portion of the aircraft and the hot spots over the areas of the image. The hot spots correspond to the installation plans for the areas over which the hot spots are located and the hot spots are selectable by user input.

The process then displays information on the display system in the mobile data processing system about the installation plan for an area in the areas when a hot spot in the hot spots corresponding to the area is selected by user input (operation **1606**), with the process terminating thereafter. The display of the information provides a visual aid that enables performance of an assembly operation in the area selected. In operation **1606,** the displaying of the display system may include, for example, displaying at least one of parts to provide the visual aid as a guide to locate the parts installed during assembly of the aircraft, instructions for assembling a group of parts, a checklist of the parts, or a group of links that are selectable to display at least one of an engineering drawing, a computer aided design model, or inspection data.

With the visual aid, an operator may perform the assembly operation in the area using the information about the installation plan displayed for the area selected by the user input. The assembly operation is selected from one of an assembly of parts and an inspection of an assembly of parts.

With reference now to **Figure 17****,** an illustration of a flowchart of a process for identifying a portion of an aircraft is depicted in accordance with an illustrative embodiment. The process illustrated in **Figure 17** is an example of one implementation for operation **1600** in **Figure 16****.**

The process begins by displaying a plan view of the aircraft representing portions of the aircraft that are selectable to display the display for the portion of the aircraft selected from the plan view (operation **1700**). The process then receives a user input selecting the portion from the portions displayed in the plan view (operation **1702**), with the process terminating thereafter.

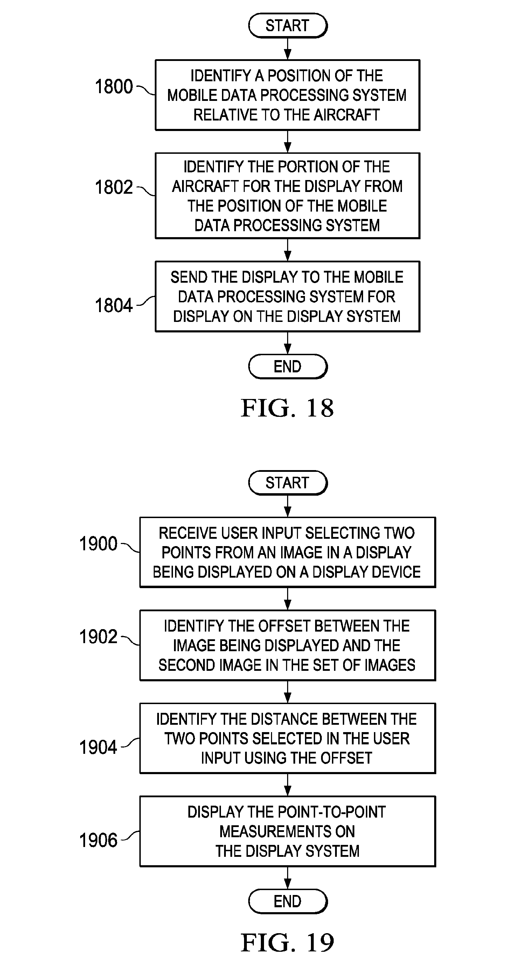

With reference now to **Figure 18****,** another illustration of a flowchart of a process for identifying a portion of an aircraft is depicted in accordance with an illustrative embodiment. The process illustrated in **Figure 18** is another example of an implementation for operation **1600** in **Figure 16**.

The process begins by identifying a position of the mobile data processing system relative to the aircraft (operation **1800**). The process then identifies the portion of the aircraft for the display from the position of the mobile data processing system (operation **1802**). The position of the mobile data processing system may be identified through the camera of the mobile data processing system at a position in the aircraft with images for different portions of the aircraft. Alternatively, other positioning systems such as a wireless positioning system, a dead reckoning system, or other currently available techniques for identifying positions may be used.

With the portion identified, the display of the portion of the aircraft as identified using this process may be made using the image for the portion of the aircraft and the hot spots over areas of the image based on the position of the mobile data processing system as described in operation **1602** in **Figure 16**. The display may then be sent to the mobile data processing system for display on the display system (operation **1804**), with the process terminating thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step. For example, one or more of the blocks may be implemented as program code, in hardware, or a combination of the program code and hardware. When implemented in hardware, the hardware may, for example, take the form of integrated circuits that are manufactured or configured to perform one or more operations in the flowcharts or block diagrams. When implemented as a combination of program code and hardware, the implementation may take the form of firmware.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

With reference next to **Figure 19****,** an illustration of a flowchart of a process for generating point-to-point measurements is depicted in accordance with an illustrative embodiment. The process illustrated in **Figure 19** may be implemented in computer system **118.** For example, the process may be implemented using mobile data processing system **120** in visualizer **114.**

The process begins by receiving user input selecting two points from an image in a display being displayed on a display device (operation **1900**). In this illustrative example, the user input may be made to a touchscreen in mobile data processing system **120.** The image being displayed may be displayed along with another second image taken from an offset position. In other illustrative examples, only one image may be displayed and the second image in the set is used to calculate distances between selected points.

The process then identifies the offset between the image being displayed and the second image in the set of images (operation **1902**). The process then identifies the distance between the two points selected in the user input using the offset (operation **1904**). Operation **1904** may include scaling pixels in images using computer-aided design models for the object represented in the pixelated images. As a result, selections of pixels in different locations may be used in identifying the distance between those pixels. The process displays the point-to-point measurements on the display system (operation **1906**), with the process terminating thereafter.

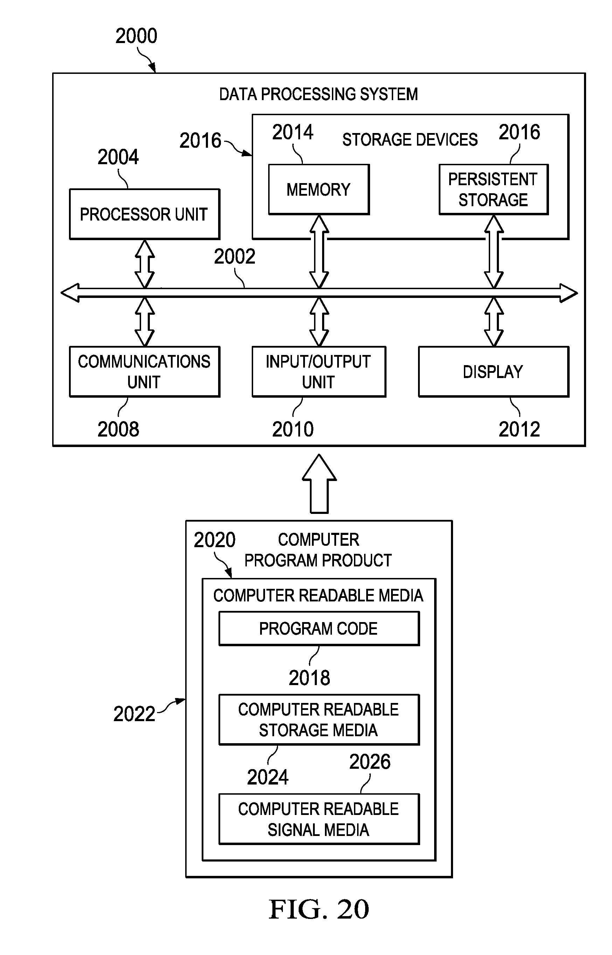

Turning now to **Figure 20****,** an illustration of a data processing system in the form of a block diagram is depicted in accordance with an illustrative embodiment. Data processing system **2000** may be used to implement one or more computers in computer system **118** in **Figure 1****.** For example, data processing system **2000** may be used to implement mobile data processing system **120** in **Figure 1****.** As depicted, data processing system **2000** includes communications framework **2002,** which provides communications between processor unit **2004,** storage devices **2006**, communications unit **2008,** input/output unit **2010,** and display **2012**. In some cases, communications framework **2002** may be implemented as a bus system.

Processor unit **2004** is configured to execute instructions for software to perform a number of operations. Processor unit **2004** may comprise at least one of a number of processors, a multi-processor core, or some other type of processor, depending on the implementation. In some cases, processor unit **2004** may take the form of a hardware unit, such as a circuit system, an application specific integrated circuit (ASIC), a programmable logic device, or some other suitable type of hardware unit.

Instructions for at least one of the operating system, applications, or programs run by processor unit **2004** may be located in storage devices **2006**. Storage devices **2006** may be in communication with processor unit **2004** through communications framework **2002**. As used herein, a storage device, also referred to as a computer readable storage device, is any piece of hardware capable of storing information on at least one of a temporary or permanent basis. This information may include, but is not limited to, data, program code, and other information.

Memory **2014** and persistent storage **2016** are examples of storage devices **2006.** Memory **2014** may take the form of, for example, a random access memory or some type of volatile or nonvolatile storage device. Persistent storage **2016** may comprise any number of components or devices. For example, persistent storage **2016** may comprise a hard drive, a flash memory, a rewritable optical disk, a rewritable magnetic tape, or some combination of the above. The media used by persistent storage **2016** may or may not be removable.

Communications unit **2008** allows data processing system **2000** to communicate with other data processing systems and devices. Communications unit **2008** may provide communications using physical communications links, wireless communications links, or some combination thereof.

Input/output unit **2010** allows input to be received from and output to be sent to other devices connected to data processing system **2000.** For example, input/output unit **2010** may allow user input to be received through at least one of a keyboard, a mouse, or some other type of input device. As another example, input/output unit **2010** may allow output to be sent to a printer connected to data processing system **2000.**

Display **2012** is configured to display information to a user. Display **2012** may comprise, for example, without limitation, a monitor, a touch screen, a laser display, a holographic display, a virtual display device, or some other type of display device.

In this illustrative example, the processes of the different illustrative embodiments may be performed by processor unit **2004** using computer-implemented instructions. These instructions may be referred to as program code, computer usable program code, or computer readable program code and may be read and executed by one or more processors in processor unit **2004**.

In these examples, program code **2018** is located in a functional form on computer readable media **2020,** which is selectively removable, and may be loaded onto or transferred to data processing system **2000** for execution by processor unit **2004.** Program code **2018** and computer readable media **2020** together form computer program product **2022.** In this illustrative example, computer readable media **2020** may be computer readable storage media **2024** or computer readable signal media **2026.**

Computer readable storage media **2024** is a physical or tangible storage device used to store program code **2018** rather than a medium that propagates or transmits program code **2018.** Computer readable storage media **2024** may be, for example, without limitation, an optical or magnetic disk or a persistent storage device that is connected to data processing system **2000.**

Alternatively, program code **2018** may be transferred to data processing system **2000** using computer readable signal media **2026.** Computer readable signal media **2026** may be, for example, a propagated data signal containing program code **2018.** This data signal may be using at least one of an electromagnetic signal, an optical signal, or some other type of signal that can be transmitted over physical communications links, wireless communications links, or both.

The illustration of data processing system **2000** in **Figure 20** is not meant to provide architectural limitations to the manner in which the illustrative embodiments may be implemented. The different illustrative embodiments may be implemented in a data processing system that includes components in addition to or in place of those illustrated for data processing system **2000.** Further, components shown in **Figure 20** may be varied from the illustrative examples shown.

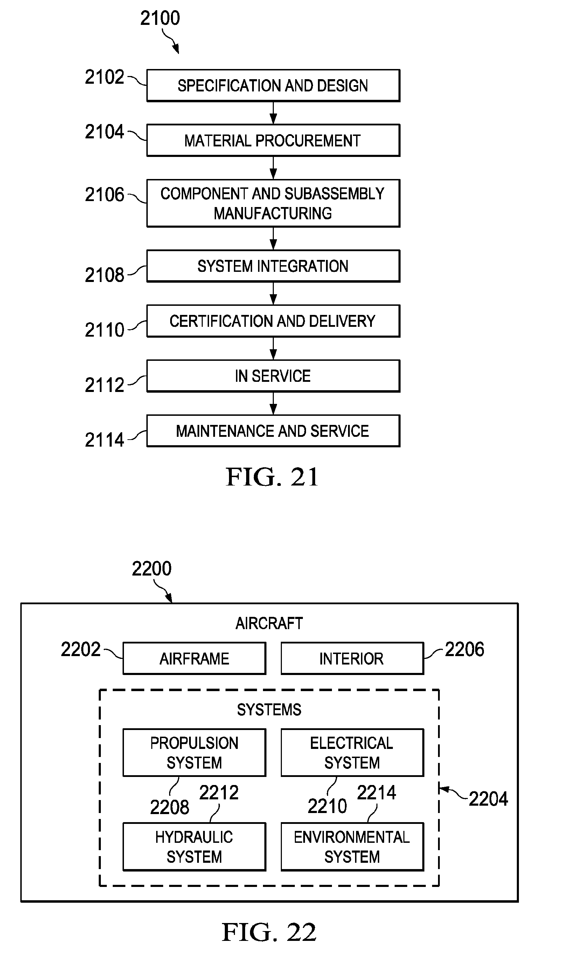

The illustrative embodiments of the disclosure may be described in the context of aircraft manufacturing and service method **2100** as shown in **Figure 21** and aircraft **2200** as shown in **Figure 22****.** Turning first to **Figure 21****,** an illustration of an aircraft manufacturing and service method is depicted in the form of a block diagram in accordance with an illustrative embodiment. During pre-production, aircraft manufacturing and service method **2100** may include specification and design **2102** of aircraft **2200** in **Figure 22** and material procurement **2104.**

During production, component and subassembly manufacturing **2106** and system integration **2108** of aircraft **2200** in **Figure 22** takes place. Thereafter, aircraft **2200** in **Figure 22** may go through certification and delivery **2110** in order to be placed in service **2112.** While in service **2112** by a customer, aircraft **2200** in **Figure 22** is scheduled for routine maintenance and service **2114,** which may include modification, reconfiguration, refurbishment, and other maintenance or service.

Each of the processes of aircraft manufacturing and service method **2100** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 22****,** an illustration of an aircraft is depicted in the form of a block diagram in which an illustrative embodiment may be implemented. In this example, aircraft **2200** is produced by aircraft manufacturing and service method **2100** in **Figure 21** and may include airframe **2202** with plurality of systems **2204** and interior **2206.** Examples of systems **2204** include one or more of propulsion system **2208,** electrical system **2210,** hydraulic system **2212,** and environmental system **2214.** Any number of other systems may be included. Although an aerospace example is shown, different illustrative embodiments may be applied to other industries, such as the automotive industry. Apparatuses and methods embodied herein may be employed during at least one of the stages of aircraft manufacturing and service method **2100** in **Figure 21****.**

In one illustrative example, components or subassemblies produced in component and subassembly manufacturing **2106** in **Figure 21** may be fabricated or manufactured in a manner similar to components or subassemblies produced while aircraft **2200** is in service **2112** in **Figure 21****.** As yet another example, one or more apparatus embodiments, method embodiments, or a combination thereof may be utilized during production stages, such as component and subassembly manufacturing **2106** and system integration **2108** in **Figure 21****.** One or more apparatus embodiments, method embodiments, or a combination thereof may be utilized while aircraft **2200** is in service **2112,** during maintenance and service **2114** in **Figure 21****,** or both.

For example, visualizer **114** and mobile data processing system **120** may be used to perform assembly operations during system integration **2108.** Additionally, an illustrative embodiment also may be used during maintenance and service **2114** in a maintenance environment to perform assembly operations that may occur during maintenance. For example, assembly operations may be performed to replace parts, install new parts, and perform other operations. These assembly operations may be performed for normal maintenance, refurbishment, upgrades, and other types of maintenance that may be performed on aircraft **2200** during maintenance and service **2114.** The use of a number of the different illustrative embodiments may substantially expedite the assembly of aircraft **2200,** reduce the cost of aircraft **2200,** or both expedite the assembly of aircraft **2200** and reduce the cost of aircraft **2200.**

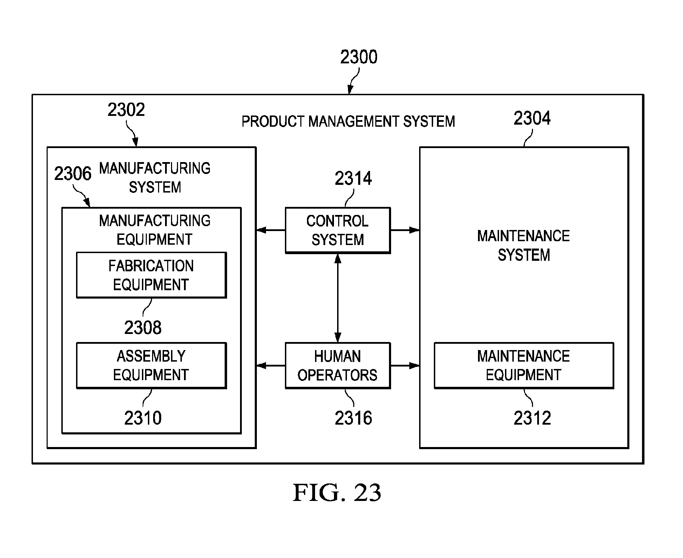

Turning now to **Figure 23****,** an illustration of a block diagram of a product management system is depicted in accordance with an illustrative embodiment. Product management system **2300** is a physical hardware system. In this illustrative example, product management system **2300** may include at least one of manufacturing system **2302** or maintenance system **2304.** When used to manage a product such as an aircraft, product management system **2300** may be referred to as an aircraft management system.

Manufacturing system **2302** is configured to manufacture products, such as aircraft **2200** in **Figure 22****.** As depicted, manufacturing system **2302** includes manufacturing equipment **2306.** Manufacturing equipment **2306** includes at least one of fabrication equipment **2308** or assembly equipment **2310.**

Fabrication equipment **2308** is equipment that may be used to fabricate components for parts used to form aircraft **2200.** For example, fabrication equipment **2308** may include machines and tools. These machines and tools may be at least one of a drill, a hydraulic press, a furnace, a mold, a composite tape laying machine, a vacuum system, a lathe, or other suitable types of equipment. Fabrication equipment **2308** may be used to fabricate at least one of metal parts, composite parts, semiconductors, circuits, fasteners, ribs, skin panels, spars, antennas, or other suitable types of parts.

Assembly equipment **2310** is equipment used to assemble parts to form aircraft **2200.** In particular, assembly equipment **2310** may be used to assemble components and parts to form aircraft **2200.** Assembly equipment **2310** also may include machines and tools. These machines and tools may be at least one of a robotic arm, a crawler, a faster installation system, a rail-based drilling system, a robot, or other suitable types of equipment. Assembly equipment **2310** may be used to assemble parts such as seats, horizontal stabilizers, wings, engines, engine housings, landing gear systems, and other parts for aircraft **2200.**

In this illustrative example, maintenance system **2304** includes maintenance equipment **2312.** Maintenance equipment **2312** may include any equipment needed to perform maintenance on aircraft **2200.** This maintenance may include tools for performing different operations on parts on aircraft **2200.**

These operations may include at least one of disassembling parts, refurbishing parts, inspecting parts, reworking parts, manufacturing placement parts, or other operations for performing maintenance on aircraft **2200.** These operations may be for routine maintenance, inspections, upgrades, refurbishment, or other types of maintenance operations.

In the illustrative example, maintenance equipment **2312** may include ultrasonic inspection devices, x-ray imaging systems, vision systems, drills, crawlers, and other suitable device. In some cases, maintenance equipment **2312** may include fabrication equipment **2308,** assembly equipment **2310,** or both to produce and assemble parts that may be needed for maintenance.

Product management system **2300** also includes control system **2314.** Control system **2314** is a hardware system and may also include software or other types of components. Control system **2314** is configured to control the operation of at least one of manufacturing system **2302** or maintenance system **2304.** In particular, control system **2314** may control the operation of at least one of fabrication equipment **2308,** assembly equipment **2310,** or maintenance equipment **2312.**

The hardware in control system **2314** may be using hardware that may include computers, circuits, networks, and other types of equipment. The control may take the form of direct control of manufacturing equipment **2306.** For example, robots, computer-controlled machines, and other equipment may be controlled by control system **2314.** In other illustrative examples, control system **2314** may manage operations performed by human operators **2316** in manufacturing or performing maintenance on aircraft **2200.** For example, control system **2314** may assign tasks, provide instructions, display models, or perform other operations to manage operations performed by human operators **2316.**

In these illustrative examples, visualizer **114** from **Figure 1** may be implemented in control system **2314** to manage at least one of the manufacturing or maintenance of aircraft **2200** in **Figure 22****.** In particular, visualizer **114** may be used to provide visualizations to human operators **2316** in a manner that increases efficiency in managing at least one of manufacturing or maintenance of aircraft **2200** in **Figure 22****.**

In the different illustrative examples, human operators **2316** may operate or interact with at least one of manufacturing equipment **2306,** maintenance equipment **2312,** or control system **2314.** This interaction may be performed to manufacture aircraft **2200.** In these illustrative examples, a mobile data processing system, such as mobile data processing system **120,** may be part of at least one of manufacturing equipment **2306** or maintenance equipment **2312** in used to perform manufacturing or maintenance operations.

Of course, product management system **2300** may be configured to manage other products other than aircraft **2200.** Although product management system **2300** has been described with respect to manufacturing in the aerospace industry, product management system **2300** may be configured to manage products for other industries. For example, product management system **2300** may be configured to manufacture products for the automotive industry as well as any other suitable industries.

Thus, one or more illustrative embodiments may be used to provide the visual aids to operators performing assembly operations for an aircraft. In one illustrative example, a visualizer and a mobile data processing system may be used to provide a visual aid to an operator performing the assembly operation. This visual aid may be displayed on a display system in the mobile data processing system while the operator is at a location relative to the aircraft. For example, the operator may be performing the assembly operation on the exterior of the aircraft or in the interior of the aircraft. With an illustrative embodiment, the operator may obtain the visualization using the visual aid of where and how the assembly operation should be performed for a particular installation plan. For example, an image of a portion of an aircraft may be displayed that allows the operator to traverse the image to locate where the assembly operation should be performed. In these illustrative examples, hot spots with graphical overlays representing installation plans are present. The graphical overlays are displayed over locations where the assembly operation should be performed.

The graphical overlays provide the operator the visualization of where in the aircraft a particular assembly operation should be performed for particular installation plans. In this manner, one or more illustrative embodiments overcome issues with the use of paper engineering drawings and checklists. With the use of images in a display, the amount of processing resources may be reduced to generate a display for the human operator on a mobile data processing system as compared to generating a display with the model of the entire aircraft.

Further, in an illustrative example, a model of a particular part or assembly of parts may be displayed using the mobile data processing system. This model is smaller in size than the model of the entire aircraft, allowing for the use of fewer resources to provide a visualization.

Further alternative arrangements are also described according to the following clauses:
Clause 1. A method for providing a visual aid (116) in assembling an aircraft (100), the method including displaying a display (128) for a portion (130) of the aircraft (100) on a display system (134) in a mobile data processing system (120), wherein the display (128) on the display system (134) comprises an image (200) of the portion (130) of the aircraft (100) and hot spots (202) over areas (204) of the image (200), wherein the hot spots (202) correspond to installation plans (112) for the areas (204) over which the hot spots (202) are located and the hot spots (202) are selectable by user input (206); and
   displaying information (208) on the display system (134) in the mobile data processing system (120) about an installation plan (126) for an area (210) in the areas (204) when a hot spot (212) in the hot spots (202) corresponding to the area (210) is selected by the user input (206), wherein the display (128) of the information (208) on the display system (134) provides the visual aid (116) that enables performance of an assembly operation (110) in the area (210) selected.
Clause 2. The method of Clause 1 further including identifying the portion (130) of the aircraft (100); and
   generating the display (128) of the portion (130) of the aircraft (100) as identified using the image (200) of the portion (130) of the aircraft (100) and the hot spots (202) over the areas (204) of the image (200).
Clause 3. The method of Clause 2, wherein generating the display (128) of the portion (130) of the aircraft (100) as identified using the image (200) of the portion (130) of the aircraft (100) and the hot spots (202) over the areas (204) of the image (200) includes generating the display (128) of the portion (130) of the aircraft (100) as identified using the image (200) of the portion (130) of the aircraft (100) and the hot spots (202) over the areas (204) of the image (200) at a computer; and sending the display (128) to the mobile data processing system (120).
Clause 4. The method of Clause 2, wherein identifying the portion (130) of the aircraft (100) includes displaying a plan view (214) of the aircraft (100) representing portions (216) of the aircraft (100) that are selectable to display the display (128) for the portion (130) of the aircraft (100) selected from the plan view (214); and
   receiving the user input (206) selecting the portion (130) from the portions (216) displayed in the plan view (214).
Clause 5. The method of Clause 3 further including displaying phases of assembly (218) for the aircraft (100) that are selectable such that the image (200) displayed for the portion (130) selected corresponds to a phase of assembly (220) selected.
Clause 6. The method of Clause 1 further including identifying a position (302) of the mobile data processing system (120) relative to the aircraft (100), wherein generating the display (128) of the portion (130) of the aircraft (100) as identified using the image (200) of the portion (130) of the aircraft (100) and the hot spots (202) over the areas (204) of the image (200) includes generating the display (128) of the portion (130) of the aircraft (100) as identified using the image (200) of the portion (130) of the aircraft (100) and the hot spots (202) over the areas (204) of the image (200) based on the position (302) of the mobile data processing system (120); and further including sending the display (128) to the mobile data processing system (120).
Clause 7. The method of Clause 1, wherein the displaying step includes displaying at least one of parts (108) to provide the visual aid (116) as a guide to locate the parts (108) installed during assembly of the aircraft (100); instructions for assembling a group of parts (108), a checklist of the parts (108); or a group of links that are selectable to display at least one of an engineering drawing, a computer aided design model, or inspection data.
Clause 8. The method of Clause 1, wherein the hot spot (212) in the hot spots (202) is selected from the user input (206) comprising at least one of a pointer hovering over the hot spot (212), a rollover, or a mouse click when the pointer is over the hot spot (212) and wherein the portion (130) of the aircraft (100) is selected from one of an interior of the aircraft (100) or an exterior of the aircraft (100).
Clause 9. The method of Clause 1, wherein the hot spots (202) are displayed using graphical overlays (222) on the areas (204) where assembly is planned based on the installation plans (112) .
Clause 10. An apparatus including a visualizer (114) that displays a display (128) for a portion (130) of an aircraft (100) on a display system (134) in a mobile data processing system (120), wherein the display (128) on the display system (134) comprises an image (200) of the portion (130) of the aircraft (100) and hot spots (202) over areas (204) of the image (200), wherein the hot spots (202) correspond to installation plans (112) for the areas (204) over which the hot spots (202) are located and the hot spots (202) are selectable by user input (206); and displays information (208) on the display system (134) in the mobile data processing system (120) about an installation plan (126) for an area (210) in the areas (204) when a hot spot (212) in the hot spots (202) corresponding to the area (210) is selected by the user input (206), wherein the display (128) of the information (208) on the display system (134) provides a visual aid (116) that enables performance of an assembly operation (110) in the area (210) selected.
Clause 11. The apparatus of Clause 10, wherein the visualizer (114) identifies the portion (130) of the aircraft (100); and generates the display (128) of the portion (130) of the aircraft (100) as identified using the image (200) of the portion (130) of the aircraft (100) and the hot spots (202) over the areas (204) of the image (200).
Clause 12. The apparatus of Clause 11, wherein in generating the display (128), the visualizer (114) generates the display (128) of the portion (130) of the aircraft (100) as identified using the image (200) of the portion (130) of the aircraft (100) and the hot spots (202) over the areas (204) of the image (200) at a computer and sends the display (128) to the mobile data processing system (120).
Clause 13. The apparatus of Clause 11, wherein in identifying the portion (130) of the aircraft (100), the visualizer (114) displays a plan view (214) of the aircraft (100) representing portions (216) of the aircraft (100) that are selectable to display the display (128) for the portion (130) of the aircraft (100) selected from the plan view (214); and receives the user input (206) selecting the portion (130) from the portions (216) displayed in the plan view (214).
Clause 14. The apparatus of Clause 11, wherein in identifying the portion (130) of the aircraft (100), the visualizer (114) identifies a position (302) of the mobile data processing system (120) relative to the aircraft (100), wherein in generating the display (128), the visualizer (114) generates the display (128) of the portion (130) of the aircraft (100) as identified using the image (200) of the portion (130) of the aircraft (100) and the hot spots (202) over the areas (204) of the image (200) based on the position (302) of the mobile data processing system (120); and sends the display (128) to the mobile data processing system (120).
Clause 15. The apparatus of Clause 12, wherein the visualizer (114) displays phases of assembly (218) for the aircraft (100) that are selectable such that the image (200) displayed for the portion (130) selected corresponds to a phase of assembly (220) selected.
Clause 16. The apparatus of Clause 10, wherein in displaying the display (128), the visualizer (114) displays at least one of parts (108) to provide the visual aid (116) as a guide to locate the parts (108) installed during assembly of the aircraft (100); a checklist of the parts (108); or a group of links that are selectable to display at least one of an engineering drawing, a computer aided design model, or inspection data.
Clause 17. The apparatus of Clause 10, wherein the hot spot (212) in the hot spots (202) selected from the user input (206) comprises at least one of a pointer hovering over the hot spot (212), a rollover, or a mouse click when the pointer is over the hot spot (212).
Clause 18. The apparatus of Clause 10, wherein the hot spots (202) are displayed using graphical overlays (222) on the areas (204) where assembly is planned based on the installation plans (112).
Clause 19. The apparatus of Clause 10, wherein the image (200) is formed from combining photographic images with overlapping fields of view for the portion (130) of the aircraft (100).
Clause 20. An aircraft management system including a manufacturing system (2302); and a control system (2314) that displays a display (128) for a portion (130) of an aircraft (100) on a display system (134) in a mobile data processing system (120), wherein the display (128) on the display system (134) comprises an image (200) of the portion (130) of the aircraft (100) and hot spots (202) over areas (204) of the image (200), wherein the hot spots (202) correspond to installation plans (112) for the areas (204) over which the hot spots (202) are located and the hot spots (202) are selectable by user input (206); and displays information (208) on the display system (134) in the mobile data processing system (120) about an installation plan (126) for an area (210) in the areas (204) when a hot spot (212) in the hot spots (202) corresponding to the area (210) is selected by the user input (206), wherein the display (128) of the information (208) provides a visual aid (116) that enables performance of an assembly operation (110) in the area (210) selected using the manufacturing system (2302). The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for providing a visual aid (116) in assembling an aircraft (100), the method comprising:
displaying a display (128) for a portion (130) of the aircraft (100) on a display system (134) in a mobile data processing system (120), wherein the display (128) on the display system (134) comprises an image (200) of the portion (130) of the aircraft (100) and hot spots (202) over areas (204) of the image (200), wherein the hot spots (202) correspond to installation plans (112) for the areas (204) over which the hot spots (202) are located and the hot spots (202) are selectable by user input (206); and
displaying information (208) on the display system (134) in the mobile data processing system (120) about an installation plan (126) for an area (210) in the areas (204) when a hot spot (212) in the hot spots (202) corresponding to the area (210) is selected by the user input (206), wherein the display (128) of the information (208) on the display system (134) provides the visual aid (116) that enables performance of an assembly operation (110) in the area (210) selected.

2. The method of claim 1 further comprising:
identifying the portion (130) of the aircraft (100); and
generating the display (128) of the portion (130) of the aircraft (100) as identified using the image (200) of the portion (130) of the aircraft (100) and the hot spots (202) over the areas (204) of the image (200); and
wherein generating the display (128) of the portion (130) of the aircraft (100) as identified using the image (200) of the portion (130) of the aircraft (100) and the hot spots (202) over the areas (204) of the image (200) comprises:
generating the display (128) of the portion (130) of the aircraft (100) as identified using the image (200) of the portion (130) of the aircraft (100) and the hot spots (202) over the areas (204) of the image (200) at a computer; and
sending the display (128) to the mobile data processing system (120); and
wherein identifying the portion (130) of the aircraft (100) comprises:
displaying a plan view (214) of the aircraft (100) representing portions (216) of the aircraft (100) that are selectable to display the display (128) for the portion (130) of the aircraft (100) selected from the plan view (214); and
receiving the user input (206) selecting the portion (130) from the portions (216) displayed in the plan view (214).

3. The method of claim 2 further comprising:
displaying phases of assembly (218) for the aircraft (100) that are selectable such that the image (200) displayed for the portion (130) selected corresponds to a phase of assembly (220) selected.

4. The method of claim 1 further comprising:
identifying a position (302) of the mobile data processing system (120) relative to the aircraft (100), wherein generating the display (128) of the portion (130) of the aircraft (100) as identified using the image (200) of the portion (130) of the aircraft (100) and the hot spots (202) over the areas (204) of the image (200) comprises:
generating the display (128) of the portion (130) of the aircraft (100) as identified using the image (200) of the portion (130) of the aircraft (100) and the hot spots (202) over the areas (204) of the image (200) based on the position (302) of the mobile data processing system (120); and further comprising:
sending the display (128) to the mobile data processing system (120).

5. The method of claim 1, wherein the displaying step comprises:
displaying at least one of parts (108) to provide the visual aid (116) as a guide to locate the parts (108) installed during assembly of the aircraft (100); instructions for assembling a group of parts (108), a checklist of the parts (108); or a group of links that are selectable to display at least one of an engineering drawing, a computer aided design model, or inspection data.

6. The method of claim 1, wherein the hot spot (212) in the hot spots (202) is selected from the user input (206) comprising at least one of a pointer hovering over the hot spot (212), a rollover, or a mouse click when the pointer is over the hot spot (212) and wherein the portion (130) of the aircraft (100) is selected from one of an interior of the aircraft (100) or an exterior of the aircraft (100).

7. The method of claim 1, wherein the hot spots (202) are displayed using graphical overlays (222) on the areas (204) where assembly is planned based on the installation plans (112).

8. An apparatus comprising:
a visualizer (114) that displays a display (128) for a portion (130) of an aircraft (100) on a display system (134) in a mobile data processing system (120), wherein the display (128) on the display system (134) comprises an image (200) of the portion (130) of the aircraft (100) and hot spots (202) over areas (204) of the image (200), wherein the hot spots (202) correspond to installation plans (112) for the areas (204) over which the hot spots (202) are located and the hot spots (202) are selectable by user input (206); and displays information (208) on the display system (134) in the mobile data processing system (120) about an installation plan (126) for an area (210) in the areas (204) when a hot spot (212) in the hot spots (202) corresponding to the area (210) is selected by the user input (206), wherein the display (128) of the information (208) on the display system (134) provides a visual aid (116) that enables performance of an assembly operation (110) in the area (210) selected.

9. The apparatus of claim 8, wherein the visualizer (114) identifies the portion (130) of the aircraft (100); and generates the display (128) of the portion (130) of the aircraft (100) as identified using the image (200) of the portion (130) of the aircraft (100) and the hot spots (202) over the areas (204) of the image (200).

10. The apparatus of claim 9, wherein in generating the display (128), the visualizer (114) generates the display (128) of the portion (130) of the aircraft (100) as identified using the image (200) of the portion (130) of the aircraft (100) and the hot spots (202) over the areas (204) of the image (200) at a computer and sends the display (128) to the mobile data processing system (120); and
wherein the visualizer (114) displays phases of assembly (218) for the aircraft (100) that are selectable such that the image (200) displayed for the portion (130) selected corresponds to a phase of assembly (220) selected.

11. The apparatus of claim 9, wherein in identifying the portion (130) of the aircraft (100), the visualizer (114) displays a plan view (214) of the aircraft (100) representing portions (216) of the aircraft (100) that are selectable to display the display (128) for the portion (130) of the aircraft (100) selected from the plan view (214); and receives the user input (206) selecting the portion (130) from the portions (216) displayed in the plan view (214).

12. The apparatus of claim 9, wherein in identifying the portion (130) of the aircraft (100), the visualizer (114) identifies a position (302) of the mobile data processing system (120) relative to the aircraft (100), wherein in generating the display (128), the visualizer (114) generates the display (128) of the portion (130) of the aircraft (100) as identified using the image (200) of the portion (130) of the aircraft (100) and the hot spots (202) over the areas (204) of the image (200) based on the position (302) of the mobile data processing system (120); and sends the display (128) to the mobile data processing system (120).

13. The apparatus of claim 8, wherein in displaying the display (128), the visualizer (114) displays at least one of parts (108) to provide the visual aid (116) as a guide to locate the parts (108) installed during assembly of the aircraft (100); a checklist of the parts (108); or a group of links that are selectable to display at least one of an engineering drawing, a computer aided design model, or inspection data.

14. The apparatus of claim 8, wherein the hot spot (212) in the hot spots (202) selected from the user input (206) comprises at least one of a pointer hovering over the hot spot (212), a rollover, or a mouse click when the pointer is over the hot spot (212);
wherein the hot spots (202) are displayed using graphical overlays (222) on the areas (204) where assembly is planned based on the installation plans (112); and
wherein the image (200) is formed from combining photographic images with overlapping fields of view for the portion (130) of the aircraft (100).
